# EUROPÄISCHE PATENTSCHRIFT

(11) **EP 3 994 033 B1**
(45) Veröffentlichungstag und Bekanntmachung des Hinweises auf die Patenterteilung: **21.02.2024**
(21) Anmeldenummer: 20736627.9
(22) Anmeldetag: 01.07.2020
(51) Int. Cl.: B60P 7/08, B60P 7/12, B60P 7/14, A01D 87/12

(54) **TRANSPORTWAGEN FÜR STÜCKGUT**
TRANSPORT CART FOR PIECE GOODS
CHARIOT DE TRANSPORT POUR CHARGE ISOLÉE

(30) Priorität: 04.07.2019 DE 102019118107
(43) Veröffentlichungstag der Anmeldung: 11.05.2022
(73) Patentinhaber: Agrarsysteme Hornung GmbH & Co. KG, 73485 Unterschneidheim-Zoebingen (DE)
(72) Erfinder: HORNUNG, Hubert, 73485 Unterschneidheim-Zoebingen (DE)
(74) Vertreter: Markfort, Iris-Anne Lucie
(86) Internationale Anmeldenummer: PCT/EP2020/068487
(87) Internationale Veröffentlichungsnummer: WO 2021/001413

(56) Entgegenhaltungen:
- WO-A1-2018/053582
- DE-A1-102013 208 659

## Beschreibung

Die Erfindung betrifft einen Transportwagen für Stückgut mit den Merkmalen des Oberbegriffs des Anspruchs 1, wobei derartige Transportwagen außer für Stückgut aus landwirtschaftlichem Erntegut, insbesondere in Form von gepressten Rund- oder Quaderballen, auch für gepressten Papierabfall, für Kunststoffballen oder anderweitige gepresste Werkstoffe, für bestückte Paletten, Kisten und dergleichen sowie für Stammholz und andere vergleichbare Stückgüter einsetzbar sind.

Der Begriff Transportwagen umfasst dabei alle Arten von Fahrzeugen, unter anderem auch Lastkraftwägen und dergleichen, sowie Anhänger und Anhängersysteme für derartige Fahrzeuge.

Bei bekannten Transportwagen wird üblicherweise das Stückgut auf die Ladeplattform aufgeladen und im Nachgang mit Gurten gesichert. Dabei ist es in der Praxis üblich, in gleichmäßigen Abständen Gurte vorzusehen, die um die Ladeplattform und das Stückgut herum geschlungen werden und das Stückgut gegen die Ladeplattform spannen. In der Praxis nachteilig ist jedoch dabei, dass die einzelnen Gurte separat angebracht und gespannt werden müssen, wodurch der Beladevorgang sich zeitaufwändig gestaltet. Ferner sind oftmals zwei Arbeiter bzw. Anwender nötig, um die einzelnen Gurte um das Stückgut herum zu schlingen und festzuspannen.

In Kenntnis dieses Problems wurde ein aus dem Stand der Technik bekannter Transportwagen für Stückgut vorgeschlagen, der anstelle von einem Vergurtungssystem zur Sicherung des auf der Ladeplattform angeordneten Stückguts bewegliche Seitenwände vorsieht, welche das Stückgut sichern. So zeigt die deutsche Gebrauchsmusterschrift DE 20 2007 019 318 U1 einen Transportwagen, dessen Längsseitenwände bzw. wenigstens eine der Längsseitenwände eine Stützvorrichtung aufweist, mittels der die jeweilige Längsseitenwand aus einer bodennahen Öffnungsstellung in eine zumindest eine obere Lage des gestapelten Stückguts erfassende und seitlich sichernde Schließstellung verlagerbar ist. Wenngleich diese Lösung durchaus Vorteile in der praktischen Anwendung mit sich bringt, kann beispielsweise nachteilig sein, dass dieses System nur dann funktioniert, wenn die unteren Ballenschichten (d. h. die plattformnahmen Ballenschichten) keine deutlich größere Breite aufweisen als die oberen Ballenschichten.

Das aus dem Stand der Technik bekannte System weist somit eine geringere Flexibilität hinsichtlich des geladenen Stückguts auf als die vorstehend beschriebene bekannte Methodik des Vergurtens des Stückguts.

Eine weitere Lösung aus dem Stand der Technik ist in der Offenlegungsschrift DE 10 2011 010 379 A1 offenbart. Dieses Dokument schlägt eine Vorrichtung zum einfachen Sichern von Gutstapeln mithilfe von Sicherungsgurten vor, wobei die Vorrichtung wenigstens zwei Führungsschienen umfasst, die oberhalb der zu sichernden Ladung angeordnet sind, wenigstens zwei Rüstschienen, die in einer Rüstposition vorgesehen sind, und wenigstens zwei Transferschienen, die von einer ersten Position, in welcher die Transferschienen mit den Rüstschienen fluchten, in eine zweite Position beweglich sind, in welcher die Transferschienen mit den Führungsschienen fluchten, sowie in den Schienen beweglich verfahrbaren zur Halterung zumindest eines Sicherungsgurtes. Die Sicherungsgurte werden über der Ladung so angeordnet, dass die freien Enden der Sicherungsgurte seitlich neben der Ladung herunterhängen, und die freien Enden der Sicherungsgurte werden an einem Ladeboden verriegelt und dabei von einer diese haltenden Halteeinrichtung und damit von den zugehörigen Schienen gelöst.

Diese vergleichsweise komplexe Schienenanordnung kann beispielsweise in einer Lagerhalle angeordnet sein und die zu sichernde Ladung wird zum Vergurten unter der Schienenanordnung verfahren. Nachteilig ist dabei, dass die Schienenanordnung nicht Teil des Transportwagens ist und somit nicht an jedem Ort (beispielsweise im landwirtschaftlichen Gebrauch auf dem Feld) einsetzbar ist.

Weiterhin ist es aus dem Stand der Technik wohlbekannt, nach oben geöffnete Lastkraftwagenanhänger mittels einer Plane zu schließen, um die zu transportierende Ladung beispielsweise vor Nässe und Wind zu schützen (vgl. auch US 8,226,150 B1).Eine weitere Lösung, um das Ladegut, beispielsweise Heuballen, auf der Ladeplattform mittels einer Plane vor Nässe zu schützen ist beispielsweise in der US 7,189,042 B1 beschrieben, bei der eine Abdeckfolie auf einem die Ladeplattform umgebenden Stützrahmen seitlich abgerollt wird. Zusätzlich können Ladungssicherungsgurte um die Ladung geführt werden. Die Ladeplattform wird seitlich nur durch die Vertikalstreben des Rahmens begrenzt.

Schließlich ist aus der EP 14 703 844.2 bereits ein Transportwagen bekannt, bei dem durch ein angetriebenes Vergurtungssystem eine schnelle Sicherung des aufgeladenen Stückguts erreicht werden kann. Diese Lösung hat sich bereits bewährt und ermöglicht insbesondere bei gleichmäßig beladener Ladefläche eine zuverlässige und einfache Sicherung. In der Praxis hat sich jedoch gezeigt, dass zusätzlich ein Bedarf an einer Lösung besteht, die insbesondere auch die Sicherung des Stückguts bei nur teilweiser Beladung der Ladefläche ermöglicht. Zudem ist es wünschenswert den Transportwagen für unterschiedlichste Stückgüter und damit auch unterschiedlichste Beladungshöhen einsetzen zu können.

Der Vollständigkeit halber sei auch auf die DE 20 2015 005 847 U1, die US 2016 / 0167 563 A1 und WO 2018 / 053 582 A1 zum Stand der Technik verwiesen. Die DE 10 2013 208659 A1 offenbart einen Transportwagen ähnlich dem Oberbegriff des Anspruchs 1.

Demgegenüber besteht eine Aufgabe der vorliegenden Erfindung darin, die Vorteile von flexiblen Gurten zur Stückgutsicherung bereitzustellen, ohne die aus der Praxis damit verbundenen Nachteile in Kauf nehmen zu müssen.

Die vorliegende Erfindung löst diese Aufgabe durch einen Transportwagen gemäß einem ersten Erfindungsaspekt mit den Merkmalen des Anspruchs 1. Weitere vorteilhafte Ausgestaltungen ergeben sich aus der nachfolgenden Beschreibung sowie den abhängigen Ansprüche 2 bis 14.

Erfindungsgemäß wird gemäß einem ersten Aspekt der Erfindung ein Transportwagen für Stückgut vorgeschlagen, der eine Ladeplattform aufweist, welche das Stückgut im Beladungszustand des Transportwagens zu untergreifen vermag, sowie ein Vergurtungssystem, das eine Sicherung des Stückguts auf der Ladeplattform ermöglicht und wenigstens ein Spannmittel umfasst, das mithilfe einer Fördereinrichtung zumindest abschnittsweise um das auf der Ladeplattform aufgeladene Stückgut herumgeführt werden kann . Die Erfindung dient insbesondere dazu um das aufgeladene Stückgut gegen die Ladeplattform zu spannen. Weiterhin ist die Ladeplattform an ihren stirnseitigen Enden durch Querseitenteile begrenzt, die die Fördereinrichtung des Vergurtungssystems umfassen. Dabei ist es möglich, dass nur an einem der beiden Querseitenteile die Fördereinrichtung des Vergurtungssystems vorgesehen ist oder an beiden Querseitenteilen.

Erfindungsgemäß ist gemäß einem ersten Aspekt der Erfindung das wenigstens eine Spannmittel relativ zu der Ladeplattform in Richtung der Längsachse verschiebbar an dem Transportwagen befestigt. Somit kann das wenigstens eine Spannmittel insbesondere bei nur teilweiser Beladung der Ladeplattform in Richtung zu dem beladenen Bereich verschoben werden. Bereich der Ladeplattform, die nicht beladen sind, müssen nicht mittels eines Spannmittels gesichert werden. Im Falle mehrerer Spannmittel ist es gleichermaßen möglich die einzelnen Spannmittel individuell zu verschieben, um so eine ideale Anordnung angepasst an den tatsächlichen Beladungszustand der Ladeplattform bereitzustellen. Insbesondere können dabei die Abstände der Spannmittel in Richtung der Längsachse variiert werden und Bereiche der Ladeplattform, die nicht beladen sind, ausgespart werden.

Denkbar ist alternativ oder zusätzlich auch ein Vorsehen der Fördereinrichtung des Vergurtungssystems an einem oder beiden Längsseitenteilen der Transportwagens.

Als Spannmittel kann beispielsweise ein Spanngurt verwendet werden. Alternativ ist jedoch die Gestaltung des Spannmittels in der Form einer netzartigen Struktur oder auch einer Spannfolie denkbar und kann abhängig von dem geladenen Stückgut von Vorteil sein. Eine Spannfolie kann dabei zusätzlich die Funktion übernehmen, das umspannte Stückgut vor äußeren Einflüssen wie z.B. Nässe zu schützen.

In der Praxis hat sich die Verwendung von mehreren Spanngurten als Spannmittel insoweit als sinnvoll erwiesen, als dass hier bereits bekannte Spanngurte verwendet werden können, wobei die Besonderheit der vorliegenden Erfindung darin zu sehen ist, dass diese Spanngurte mit Hilfe einer gemeinsamen Fördereinrichtung zumindest abschnittsweise um das Stückgut herumgeführt und gespannt werden können.

Es ist somit bei der vorliegenden Erfindung nicht mehr notwendig, dass der Anwender jeden einzelnen der Spanngurte separat um das Stückgut herumschlingt und festspannt. Stattdessen wird diese mit einer gemeinsamen Fördereinrichtung bewerkstelligt, so dass es auch einem einzelnen Anwender ohne die Hilfe eines zweiten möglich ist, das geladene Stückgut auf dem Transportwagen einfach und schnell zu sichern.

Die Spannmittel, wie vorstehend vorgeschlagen, haben den Vorteil gegenüber der aus dem Stand der Technik bekannten Gitterkonstruktion (vgl. DE 20 2007 019 318 U1), dass sie vergleichsweise leicht und formflexibel gebaut sind und gegebenenfalls bei einer Beschädigung einfach und kostengünstig ersetzt werden können.

Es kann weiterhin vorgesehen sein, dass das wenigstens eine Spannmittel des Vergurtungssystems entlang einer der Längsseiten der Ladeplattform angeordnet ist, um mit Hilfe der Fördereinrichtung zumindest abschnittsweise in eine Richtung quer zur Längserstreckung des Transportwagens um das auf der Ladeplattform aufgeladene Stückgut herumgeführt werden kann. Wie nachfolgend näher ausgeführt wird, ist es dabei nicht nötig, dass das wenigstens eine Spannmittel vollständig um das auf der Ladeplattform aufgeladene Stückgut herumgeführt wird. Alternativ kann es auch ausreichend sein, einen Winkel von beispielsweise etwa 120° zu umspannen und dabei noch immer eine ausreichende Sicherung des Stückguts zu gewährleisten. Entscheidend ist, dass die Sicherung des Stückguts durch ein Verspannen gegen die Ladeplattform erfolgt.

Um eine relative Verschiebbarkeit des wenigstens einen Spannmittels relativ zu der Ladeplattform in Richtung der Längsachse der Ladeplattform zu ermöglichen, kann vorgesehen sein, dass das wenigstens eine Spannmittel an einer Führungsschiene oder dergleichen verschiebbar angebracht ist, die sich im Wesentlichen entlang der Längsachse der Ladeplattform erstreckt. Als Führungsschiene können je nach Ausgestaltung der Erfindung auch Komponenten genutzt werden, die ohnehin vorgesehen sind und sich im Wesentlichen entlang der Längsachse der Ladeplattform erstrecken.

Bei einer Weiterbildung der Erfindung kann vorgesehen sein, dass das wenigstens eine Spannmittel mit der Fördereinrichtung variabel koppelbar und von dieser entkoppelbar ist. Bei dieser Weiterbildung können somit nicht benötigte Spannmittel nicht nur aus einem Bereich, in dem keine Beladung der Ladeplattform erfolgt und somit keine Sicherung benötigt wird, in einen anderen Bereich verlagert werden, sondern gegebenenfalls auch einfach von der Fördereinrichtung entkoppelt werden. Im entkoppelten Zustand werden die Spannmittel somit nicht um die Ladeplattform bzw. das darauf aufgeladene Stückgut herumgeführt, sondern verbleiben in einer inaktiven Stellung, beispielsweise aufgerollt.

Die variable Kopplung und Entkopplung ermöglicht es auch, dass die Spannmittel, welche in ihrer Position relativ zu der Ladeplattform verschoben wurden, an einem entsprechenden ebenfalls verschobenen Punkt der Fördereinrichtung wieder mit dieser gekoppelt werden, um eine möglichst rechtwinklige Ausrichtung der Spannmittel relativ zu der Längsachse der Ladeplattform zu ermöglichen. Zu diesem Zweck kann die Fördereinrichtung entlang der Längsachse verteilt mehrere Befestigungspunkte aufweist, an denen das wenigstens eine Spannmittel mit der Fördereinrichtung variabel koppelbar und von dieser entkoppelbar ist. Im Falle von mehreren Spannmitteln kann es analog hierzu von Vorteil sein, mehr Befestigungspunkte als Spannmittel vorzusehen.

Dabei kann jeder der Befestigungspunkte der Fördereinrichtung ein federnd vorgespanntes Befestigungsglied aufweisen, das mit einer korrespondierenden Ausnehmung an dem Spannmittel zur Befestigung des Spannmittels zusammenzuwirken vermag. Dieses System kann beispielsweise der Ausgestaltung von Fahrersicherungsgurten in Kraftfahrzeugen ähneln. Selbstverständlich ist es auch denkbar eine umgekehrte Gestaltung vorzusehen, bei der an dem Spannmittel ein federnd vorgespanntes Befestigungsglied vorgesehen ist, das mit einer korrespondierenden Ausnehmung an dem Befestigungspunkt zusammenwirkt. Als Befestigungsglied kann ein Bolzen, ein Haken oder dergleichen vorgesehen sein. Dieses kann in einem zugehörigen Schließmechanismus integriert sein, in den ein Schließmittel mit einer entsprechenden Ausnehmung eingesteckt werden kann.

Alternative Ausgestaltungen, bei denen beispielsweise das Befestigungsglied nicht federnd vorgespannt ist, sind selbstverständlich ebenfalls denkbar.

Das Vergurtungssystem kann ferner eine Spanneinrichtung zum Spannen des wenigstens einen Spannmittels aufweisen. Im Falle mehrerer Spannmittel können diese mit einer einzigen Spanneinrichtung gespannt werden. Alternativ ist es auch denkbar, dass jeweils eine Spanneinrichtung einem Spannmittel oder einer begrenzten Anzahl von Spannmitteln, z.B. zwei, drei oder vier Spannmitteln, zugeordnet ist.

Weiterhin kann die Spanneinrichtung eine um ihre Längsachse drehbare Spannwelle aufweisen, auf der das wenigstens eine zugeordnete Spannmittel zumindest abschnittsweise auf- und abwickelbar ist. Beispielsweise kann die Spannwelle wenigstens eine schlitzförmige Öffnung aufweisen, durch welche das wenigstes eine Spannmittel sich hindurch zu erstrecken vermag. Alternativ zu einer schlitzförmigen Öffnung kann die Spanneinrichtung einen Spannbügel zum Aufwickeln des wenigstens einen Spannmittels aufweisen. Diese Lösung ist besonders einfach in der Herstellung und Umsetzung des Transportwagens. Das Spannmittel wird mit Hilfe des Spannbügels auf die Spannwelle aufgewickelt.

Alternativ oder zusätzlich kann die Spanneinrichtung eine Welle zum Spannen des Spannmittels umfassen, wobei das wenigstens eine Spannmittel durch Drehung der Achse um deren Längsachse auf diese auf- und abwickelbar ist. Die Welle erfüllt dabei die Funktion des Spannens oder bei einer Gestaltungsvariante, bei der zusätzlich eine Spannwelle angebracht ist, des Vorspannens.

Alternativ oder zusätzlich kann die Spanneinrichtung eine Hohlwelle sowie eine darin angeordnete Achse umfassen, wobei das wenigstens eine Spannmittel durch Drehung der Achse relativ zu der Hohlwelle auf- und abwickelbar ist. Bei dieser Gestaltungsvariante erfüllen die Achse mit der Hohlwelle die Funktion des Spannens oder bei einer Gestaltungsvariante, bei der zusätzlich eine Spannwelle angebracht ist, des Vorspannens des Spannmittels. Dabei weist die Hohlwelle vorzugsweise wenigstens eine schlitzförmige Öffnung auf, durch welche ein freies Ende des wenigstens einen Spannmittels nach außen zu ragen vermag.

Die Spanneinrichtung dient folglich bei allen Ausgestaltungsvarianten zum Spannen des wenigstens einen Spannmittels, sobald dieses mit dem gewünschten Umschlingungswinkel um das aufgeladene Stückgut herumgeführt ist. Dabei kann das wenigstens eine Spannmittel beispielsweise bei einer Ausgestaltung mit einer Hohlwelle und einer darin aufgenommenen Achse durch eine relative Drehbewegung der Achse zu der diese umgebenden Hohlwelle aufgewickelt werden. In der Praxis wird regelmäßig die Achse gedreht und das Spannmittel auf die Achse aufgewickelt, während die Hohlwelle keine Drehbewegung durchführt. Im aufgewickelten Zustand ist das wenigstens eine Spannmittel mit Ausnahme seines freien Endes, welches durch eine entsprechende Öffnung in der Hohlwelle nach außen ragt, fast vollständig innerhalb der Hohlwelle aufgenommen. Auf diese Weise wird zudem eine besonders unkomplizierte und sichere Aufbewahrung der Spannmittel des Vergurtungssystems bereitgestellt. Grundsätzlich ist jedoch alternativ auch denkbar, dass die Hohlwelle die Drehbewegung ausführt oder dass das Spannmittel auf die außenliegende Hohlwelle aufgewickelt wird.

Das wenigstens eine Spannmittel kann zumindest mit einem Endabschnitt drehfest mit einer Komponente der Spanneinrichtung verbunden sein, wodurch das Drehen der Welle, der Achse oder der Hohlwelle ein Aufwickeln des wenigstens einen Spannmittels und umgekehrt das Abwickeln des wenigstens einen Spannmittels eine Drehung der Welle, der Achse oder der Hohlwelle zur Folge hat.

Bei einer Ausführungsform, die nur die Spannwelle zum Spannen des Spannmittels umfasst, kann durch Drehung der Spannwelle das Spannmittel auf diese auf- bzw. von dieser abgewickelt werden.

Die Spanneinrichtung kann ferner in einem Bereich, in dem das wenigstens eine Spannmittel auf eine Komponente der Spanneinrichtung auf- und abwickelbar ist, eine vergrößerte Haftreibung zwischen dieser Komponente der Spanneinrichtung und dem Spannmittel bereitstellen.

Die Spanneinrichtung kann ferner wenigstens eine Antriebseinheit umfassen, die zum Antrieb des drehenden Teils der Spanneinrichtung, beispielsweise der in der Hohlwelle angeordneten Achse, der Welle oder der Spannwelle, dient und die relative Drehbewegung veranlasst. Die Antriebseinheit ersetzt dabei einen manuellen Antrieb eines Anwenders, beispielsweise eine Kurbel oder dergleichen, und ermöglicht hierdurch ein noch komfortableres Bedienen des Vergurtungssystems.

Im Falle mehrerer Spannmittel und mehrerer angetriebener Spanneinrichtungen kann zudem eine Steuerung vorgesehen sein, die eine variable Ansteuerung der einzelnen Spanneinrichtungen nach Bedarf ermöglicht.

Die Hohlwelle kann insgesamt eine einzige schlitzförmige Öffnung aufweisen, durch die sich alle freien Enden (bei mehreren Spannmitteln) erstrecken, oder jeweils eine Öffnung, die einem Spannmittel zugeordnet ist. Gleiches gilt für die wenigstens eine schlitzförmige Öffnung der Spannwelle, durch die sich das Spannmittel durch die Spannwelle hindurch zu erstrecken vermag.

Weiterhin kann die Spanneinrichtung eine Überlastsicherung in der Form aufweisen, dass ein Spannen bzw. Aufwickeln des wenigstens einen Spannmittels nur bis zu einem vorgegebenen Schwellenwert möglich ist. Wird dieser Schwellenwert (beispielsweise ein Zugkraftwert von etwa 25 N) überschritten, verhindert die Überlastsicherung, dass das von der Antriebseinheit oder dem Anwender manuell eingeleitete Drehmoment auf das wenigstens eine Spannmittel übertragen wird. Die Überlastsicherung kann beispielsweise in der Art einer Rätschkupplung, eines Drehmomentbegrenzers oder dergleichen ausgebildet sein und gewährleistet, dass die Spannmittel keiner unzulässig hohen Zugkraft ausgesetzt werden. Auf diese Weise kann die Lebensdauer der Spannmittel erhöht werden.

Die Überlastsicherung kann bei einer ersten Variante beispielsweise an der Schnittstelle von Antriebseinheit und der sich drehenden Komponente der Spanneinrichtung, beispielsweise Welle oder Achse, vorgesehen sein und dann wenn diese infolge der auf das oder die Spannmittel einwirkenden Zugkräfte feststeht die Kraftübertragung von der Antriebseinheit auf die Welle oder Achse unterbrechen. In diesem Fall würde bei mehreren Spannmitteln keines der Spannmittel mehr nachgespannt.

Anstelle einer Überlastsicherung im Bereich der Schnittstelle der Antriebseinheit und der Welle oder Achse kann jedoch auch vorgesehen sein, dass jedes Spannmittel mit einer Überlastsicherung im Verbindungsbereich zur sich drehenden Komponente der Spanneinrichtung versehen ist. Auf diese Weise können die einzelnen Spannmittel des Vergurtungssystems unabhängig voneinander auf eine vorgegebene maximale Zugkraft gespannt werden, was insbesondere dann vorteilhaft ist, wenn die Ladeplattform nicht gleichmäßig mit Stückgut beladen ist. Eine denkbare Ausführungsform sieht beispielsweise gurtförmige Spannmittel vor, welche auf Gurtrollen aufgewickelt werden können, wobei jede Gurtrolle über eine Überlastsicherung (Rätschkupplung) mit der Welle oder Achse verbunden ist. Überschreitet die auf einen Gurt einwirkende Zugkraft einen bestimmten Schwellenwert, rutscht die Rätschkupplung durch, so dass die Drehbewegung der Welle oder Achse nicht mehr auf die zugehörige Gurtrolle übertragen wird.

Alternative Ausführungsformen zu den vorgestellten Systemen einer Überlastsicherung sind selbstverständlich ebenfalls denkbar.

Bei einer besonders günstigen Gestaltungsvariante dient wenigstens eine Komponente der Spanneinrichtung zum Vorspannen des wenigstens einen Spannmittels, insbesondere die Spannwelle, zum Sichern des wenigstens einen vorgespannten Spannmittels. So kann, wie vorstehend ausgeführt, die Spanneinrichtung durch eine Überlastsicherung vor einer Überlastung des Systems infolge der Drehbewegung zum Auf- und Abwickeln des Spannmittels geschützt werden. Dieses hat jedoch zur Folge, dass bei einem ungewollten Umkippen des Transportwagens die Überlastsicherung aufgrund der Last des ebenfalls gekippten Stückguts nachgibt und die Ladung folglich nicht mehr gesichert ist. Gerade in solchen Fällen ist eine zusätzliche Sicherung des Ladung jedoch wünschenswert. Hierfür kann die Spannwelle als zusätzliche Komponente der Spanneinrichtung genutzt werden.

Nach erfolgtem Spannvorgang mittels Welle, Achse und Hohlwelle oder anderer als Vorspanner denkbarer Komponenten mit einer Überlastsicherung, wird die Spannwelle ebenfalls um einen vorbestimmten Winkel, beispielsweise um 180 ° um ihre Längsachse gedreht. Das wenigstens eine Spannmittel erstreckt sich durch die schlitzförmige Öffnung durch die Spannwelle und wird durch deren Drehung in unmittelbare Anlage an die Außenoberfläche der Spannwelle gebracht. Diese kann, wie vorstehend ausgeführt, zumindest abschnittsweise mit einer Beschichtung, einer Oberflächenstruktur oder mit zusätzlichen Elementen (wie beispielsweise Spikes oder Gummielementen) versehen sein, die eine erhöhte Haftreibung des anliegenden Spannmittels bereitstellen. Auf diese Weise wird das wenigstens eine Spannmittel in seinem gespannten Zustand durch die bestehende Haftreibung an der Spannwelle gesichert.

Die Spannwelle selbst kann entweder in dieser sichernden Stellung mechanisch fixiert werden, z.B. durch einen Haltebolzen, der sowohl mit der Spannwelle als auch mit einem ortsfesten Teil des Transportwagens in Eingriff steht. Alternativ kann die Sicherung auch über den Antrieb der Spannwelle erfolgen. Denkbar ist beispielsweise ein hydraulischer Antrieb der Spannwelle, wobei an diesem ein Sperrventil die Spannwelle in der sichernden Stellung hält. Alternativ oder in Kombination mit dem hydraulischen Antrieb kann auch eine Zahnstange zum Einsatz kommen, die wiederum mechanisch in einer Stellung fixiert wird, in der sich die Spannwelle in ihrer sichernden Stellung befindet.

Unabhängig von der Art der Sicherung kann im Falle mehrerer Spannmittel und mehrerer Spanneinrichtungen auch vorgesehen sein, dass zudem eine Steuerung vorgesehen ist, die eine variable Ansteuerung der einzelnen Spanneinrichtungen zur Sicherung nach Bedarf ermöglicht. Auch im Falle einer mechanischen Sicherung, beispielsweise mittels eines Haltebolzens, kann jeder Spanneinrichtung bzw. jedem Spannmittel eine eigene Sicherung zugeordnet sein.

Weiterhin kann vorgesehen sein, dass die Fördereinrichtung wenigstens ein Führungsseil und/oder eine Führungsstange umfasst, mit dem oder mit der das wenigstens eine Spannmittel in der Weise verbindbar ist, dass es mittels des Führungsseils oder der Führungsstange zumindest abschnittsweise um das auf der Ladeplattform aufgeladene Stückgut herumgeführt werden kann.

Bei dieser Ausführungsform kann beispielsweise das freie Ende des wenigstens einen Spannmittels mit dem Führungsseil oder der Führungsstange verbunden werden. Bei mehreren vorgesehenen Spannmitteln ergibt sich hieraus logischerweise, dass bei einer Verlagerung des Führungsseils oder der Führungsstange alle damit verbundenen Spannmittel ebenfalls entsprechend verlagert werden können, wodurch der erfindungsgemäße Effekt erzielt wird, dass die einzelnen Spannmittel nicht separat um das Stückgut herumgeführt werden müssen.

Bei der Variante mit einer Führungsstange kann die Führungsstange vorteilhaft die Spanneinrichtung oder Komponenten davon zum Spannen oder Sichern des wenigstens einen Spannmittels umfassen. Auf diese Weise kann eine Funktionsvereinigung der Führungsstange und der Spanneinrichtung erreicht werden, wodurch aufgrund einer geringeren Anzahl von Einzelteilen das Vergurtungssystem einfacher und kostengünstiger herzustellen sein kann.

Die Fördereinrichtung kann ferner wenigstens einen, bevorzugt zwei Haltearme zum Führen und Halten des Führungsseils oder der Führungsstange umfassen, wobei der wenigstens eine Haltearm an einem der Querseitenteile angeordnet ist. Insbesondere kann dem wenigstens einen Haltearm eine Antriebseinrichtung zugeordnet sein, mittels derer der wenigstens eine Haltearm zum Führen und Halten des Führungsseils oder der Führungsstange relativ zu der Ladeplattform verlagerbar ist. Der wenigstens eine Haltearm dient somit sowohl zum Übertragen einer Verlagerungsbewegung auf das Führungsseil bzw. auf die Führungsstange und zum anderen zum Halten des Führungsseils oder der Führungsstange in der entsprechenden Position.

Alternativ zu einem Haltearm kann jedoch auch wenigstens ein, bevorzugt zwei Halterahmen zum Führen und Halten des Führungsseils oder der Führungsstange vorgesehen sein, wobei der wenigstens eine Halterahmen an einem der Querseitenteile angeordnet ist. Im Unterschied zu dem wenigstens einen Haltearm kann der wenigstens eine Halterahmen ferner wenigstens eine Führungsschiene umfassen, in der ein Abschnitt des Führungsseils oder der Führungsstange direkt oder indirekt geführt aufgenommen werden kann. Beispielsweise ist es denkbar, an den freien Enden des Führungsseils jeweils einen Bolzen oder dergleichen zu befestigen, die wiederum in den Führungsschienen zweier an den Querseitenteilen des Transportwagens angebrachten Halterahmen geführt werden können. An dem Bolzen kann zusätzlich eine Fixiervorrichtung (beispielsweise eine Spannschraube oder dergleichen) vorgesehen sein, die eine Fixierung des Abschnitts des Führungsseils relativ zu der Führungsschiene herstellen kann, sobald dies gewünscht ist. Weiterhin kann ein Verbindungsteil, beispielsweise in der Form einer starren Stange, zwischen dem als Führungsteil wirkenden Bolzen und dem jeweils zugeordneten Abschnitt des Führungsseils angeordnet sein, um den Umreifungsradius gegenüber dem Halterahmen weiter zu vergrößern. Das gleiche Funktionsprinzip lässt sich selbstverständlich auch auf eine Führungsstange übertragen.

Schließlich kann dem wenigstens einen Haltearm oder alternativ dem wenigstens einen Halterahmen eine Antriebseinrichtung zugeordnet sein, mittels derer der wenigstens eine Haltearm oder der Abschnitt des Führungsseils oder der Führungsstange, welche in der Führungsschiene aufgenommen ist, relativ zu der Ladeplattform verlagerbar ist. Die Antriebseinrichtung kann einen mechanischen oder elektrischen und/oder hydraulischen Antrieb umfassen. Eine denkbare beispielhafte Variante umfasst eine Antriebskette, die innerhalb des Halterahmens geführt sein kann.

Der vorstehend beschriebene Transportwagen mit seinem Vergurtungssystem kann folglich sowohl manuell durch einen einzigen Anwender bedienbar sein, der beispielsweise den Haltearm oder die in der Führungsschiene aufgenommenen Abschnitte des Führungsseils oder der Führungsstange in eine gewünscht Position zur Sicherung des aufgeladenen Stückguts überführt und in dieser Position sichert. Alternativ ist jedoch auch die Ausgestaltung mit einer Antriebseinrichtung denkbar und insbesondere dann von Vorteil, wenn ein besonders einfach zu bedienender Transportwagen für Stückgut gewünscht ist.

Eine entsprechende Antriebseinrichtung kann beispielsweise elektrisch, hydraulisch oder pneumatisch betrieben sein. Es kann von Vorteil sein, dass die Antriebseinrichtung auch dazu eingerichtet ist, den Haltearm oder den jeweiligen Abschnitt des Führungsseils oder der Führungsstange in der gewünschten Position zur Sicherung des Stückguts zu halten. Alternativ oder zusätzlich kann jedoch auch ein Sicherungssystem vorgesehen sein, beispielsweise eine Vorrichtung zum Einhaken oder Einrasten der Führungsstange oder des Führungsseils in der gewünschten Position.

Weiterhin kann vorgesehen sein, dass zumindest die Abschnitte der Querseitenteile, die die Fördereinrichtung des Vergurtungssystems umfassen, relativ zu der Ladeplattform in einer zu der Ladeplattform senkrechten Richtung verlagerbar sind. Diese Lösung ermöglicht es, Stückgut in unterschiedlichen Beladungshöhen sicher gegen die Ladefläche zu spannen. Weiterhin ist es nicht notwendig, die Fördereinrichtung anzupassen. So muss bei einer Ausgestaltung der Fördereinrichtung mit einer Antriebskette beispielsweise diese nicht in ihrer Länger verändert werden, sondern die gesamte Fördereinrichtung wird mit dem zugeordneten Abschnitt des Querseitenteils relativ zu der Ladeplattform nach oben oder unten verlagert.

Insbesondere können die Querseitenteile teleskopierbar ausgebildet sein und wenigstens eine Antriebseinrichtung zur Verlagerung relativ zu der Ladeplattform in einer zu der Ladeplattform senkrechten Richtung aufweisen. Die Antriebseinrichtung kann beispielsweise hydraulisch ausgebildet sein, alternative Ausgestaltungen, beispielsweise mit einem Elektromotor und Zahngestängen, sind jedoch ebenfalls denkbar.

Es kann weiterhin vorgesehen sein, dass zwischen den Querseitenteilen wenigstens ein Stützbügel zur Abstützung der Fördereinrichtung vorgesehen ist. Gerade bei einer Ladefläche mit einer Länge (in Richtung der Längsachse) von über 10 Meter dient der Stützbügel der zusätzlichen Abstützung des wenigstens einen Führungsseils und/oder der wenigstens einen Führungsstange der Fördereinrichtung Demgemäß kann der Stützbügel insbesondere auch in Richtung der Längsachse der Ladepattform verschiebbar gelagert sein, um diesen je nach Beladungszustand in seiner Position optimal auszurichten. Beispielsweise ist es denkbar, diesen mittels jeweils wenigstens einer Rolle an den Längsseiten der Ladeplattform oder an Bauteilen, die sich entlang der Längsseiten der Ladeplattform erstrecken zu lagern.

Es kann darüber hinaus von Vorteil sein, wenn der wenigstens eine Stützbügel eine Antriebseinheit der Fördereinrichtung aufweist. So kann gerade bei einer Förderstange das Eigengewicht der Förderstange bei einer entsprechenden Länge es erfordern, dass auch der Stützbügel dazu ausgebildet ist, diese zusammen mit einer oder zwei Fördereinrichtungen an den Querseiten des Transportwagens um das auf der Ladefläche zu fixierende Stückgut herum zu führen. Als Antriebseinheit kann wie bei der Antriebseinheit bzw. den Antriebseinheiten an den Querseitenteilen ein Halterahmen mit einer Antriebskette oder dergleichen vorgesehen sein.

Darüber hinaus kann der Stützbügel selbstverständlich ebenfalls in einer Richtung senkrecht zur Ladeplattform, d.h. in seiner Höhe verlagerbar ausgebildet sein. Eine denkbare Variante ist hierbei, dass zumindest ein Teil des Stützbügels teleskopierbar ist, beispielsweise die Abschnitte des Stützbügels, die sich in der Richtung senkrecht zur Ladeplattform erstrecken.

Bei einer denkbaren Weiterentwicklung der vorliegenden Erfindung kann zudem eine Umlenkeinrichtung zum Umlenken wenigstens eines Spannmittels vorgesehen sein, wobei das wenigstens eine Spannmittel mittels der Umlenkeinrichtung zumindest abschnittsweise in einer Richtung im Wesentlichen parallel zu der Längsachse der Ladeplattform geführt ist.

In der Praxis hat sich gezeigt, dass beispielsweise die Spanneinrichtung oder zumindest ein Großteil ihrer Komponenten besonders platzsparend und sicher im Bereich des Unterbodens der Transportwagens aufgenommen bzw. an diesem angebracht sein kann. Bei einer solchen Ausgestaltung ist jedoch die maximale Erstreckung der Komponenten der Spanneinrichtung in Längsrichtung (parallel zu der Längsachse der Ladeplattform) durch die Radachsen des Transportwagens begrenzt. Da jedoch auch der Bereich der Ladeplattform zur Aufnahme und Sicherung von Stückgut genutzt werden soll, der sich oberhalb der Radachsen des Transportwagens befindet, ist es notwendig, wenigstens ein Spannmittels zumindest abschnittsweise aus dem Bereich zwischen den Radachsen (in dem die Spanneinrichtung angebracht sein kann) in einen Bereich über den Radachsen umzulenken. Hierzu dient die Umlenkeinrichtung.

Diese kann insbesondere wenigstens ein Paar Umlenkrollen umfassen, die einem Spannmittel zugeordnet sind und die das zugeordnete Spannmittel in der gewünschten Weise umzulenken vermögen. Hierzu kann das Spannmittel, beispielsweise ein Spanngurt, mittels der ersten Umlenkrolle ein erstes Mal verschränkt werden und auf diese Weise um 90° umgelenkt werden, wobei das Spannmittel infolge seiner Verschränkung nicht mehr im Wesentlichen quer zur Längsachse der Ladeplattform verläuft sondern parallel. Mittels der zweiten Umlenkrolle kann das Spannmittel erneut verschränkt werden und zugleich um 90° umgelenkt werden, wobei das Spannmittel dann infolge seiner weiteren Verschränkung nicht mehr im Wesentlichen parallel zur Längsachse der Ladeplattform verläuft sondern wieder quer. Ein Umgreifen und Spannen von Stückgut, das sich oberhalb der Radachsen auf der Ladeplattform befindet, ist somit möglich.

Die vorliegende Erfindung wird nachfolgend detaillierter unter Bezugnahme auf die beigefügten Zeichnungen beschrieben, wobei diese bevorzugte Ausführungsformen der Erfindung beispielhaft darstellen, bei denen die einzelnen Merkmale der Erfindung miteinander kombiniert sind. Der Fachmann wird diese jedoch selbstverständlich auch losgelöst voneinander betrachten und/oder zu sinnvollen Kombinationen zusammenfassen können.

Es zeigen schematisch:
- Figur 1a: eine Seitenansicht eines Transportwagens gemäß dem Stand der Technik;
- Figur 1b: eine Rückansicht des Transportwagens gemäß Fig. 1a;
- Figur 2a: eine Seitenansicht eines erfindungsgemäßen Transportwagens gemäß einer ersten Ausführungsform;
- Figur 2b: eine Rückansicht des erfindungsgemäßen Transportwagens gemäß Fig. 2a;
- Figur 3a: eine Seitenansicht eines erfindungsgemäßen Transportwagens gemäß einer z weiten Ausführungsform;
- Figur 3b: eine Rückansicht des erfindungsgemäßen Transportwagens gemäß Fig. 3a;
- Figur 3c: eine Rückansicht des erfindungsgemäßen Transportwagens gemäß einer alternativen dritten Ausführungsform; und
- Figur 3d: eine Rückansicht des erfindungsgemäßen Transportwagens gemäß einer alternativen vierten Ausführungsform;
- Figur 4a: eine teilgeschnittene Ansicht eines erfindungsgemäßen Transportwagens gemäß einer alternativen fünften Ausführungsform;
- Figur 4b: eine Rückansicht des erfindungsgemäßen Transportwagens gemäß der Ausführungsform der Figur 4a;
- Figur 4c: eine Rückansicht des erfindungsgemäßen Transportwagens gemäß einer alternativen sechsten Ausführungsform;
- Figur 5: eine Detailansicht einer Spanneinrichtung eines erfindungsgemäßen Transportwagens;
- Figur 6: eine Detailansicht einer Spanneinrichtung und einer Befestigungseinrichtung eines erfindungsgemäßen Transportwagens, und
- Figuren 7a und 7b: eine Darstellung mit einer zusätzlichen Abdeckplanenanordnung.

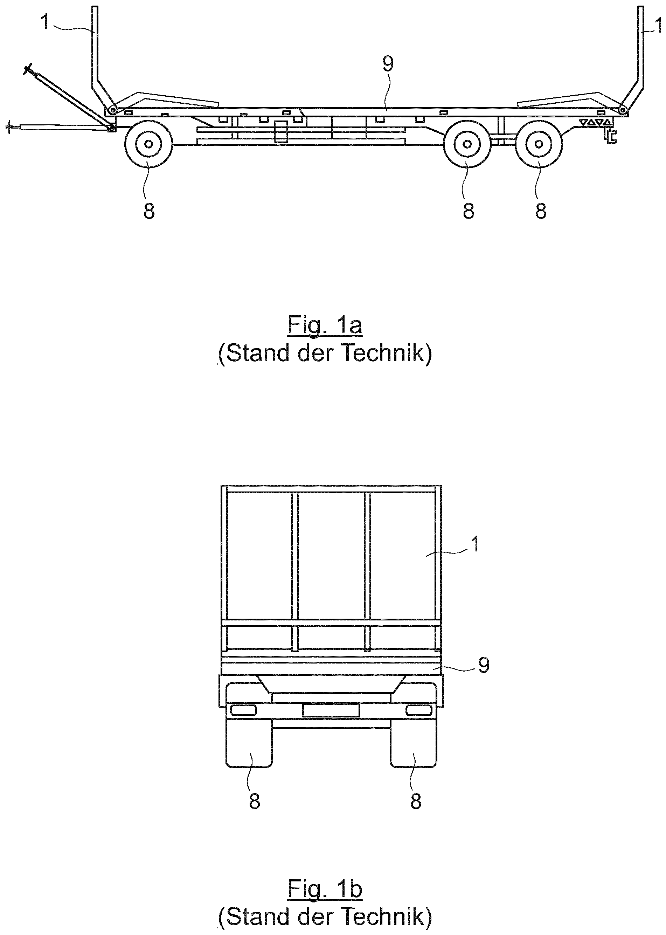

In den Figuren 1a und 1b ist allgemein ein Transportwagen gezeigt, wie er aus dem Stand der Technik bekannt ist. Dieser umfasst einen Wagenrahmen 9, der zugleich auch die Ladeplattform für das zu transportierende Stückgut bereitstellt. Die Ladeplattform erstreckt sich entlang ihrer Längsachse L und wird an ihren stirnseitigen Enden (in Figur 1a links und rechts bzw. vorne und hinten) durch Querseitenteile 1 begrenzt. Der Wagenrahmen 9 sitzt abgestützt über das Fahrwerk und die Radachsen oberhalb der Räder 8 des Transportwagens.

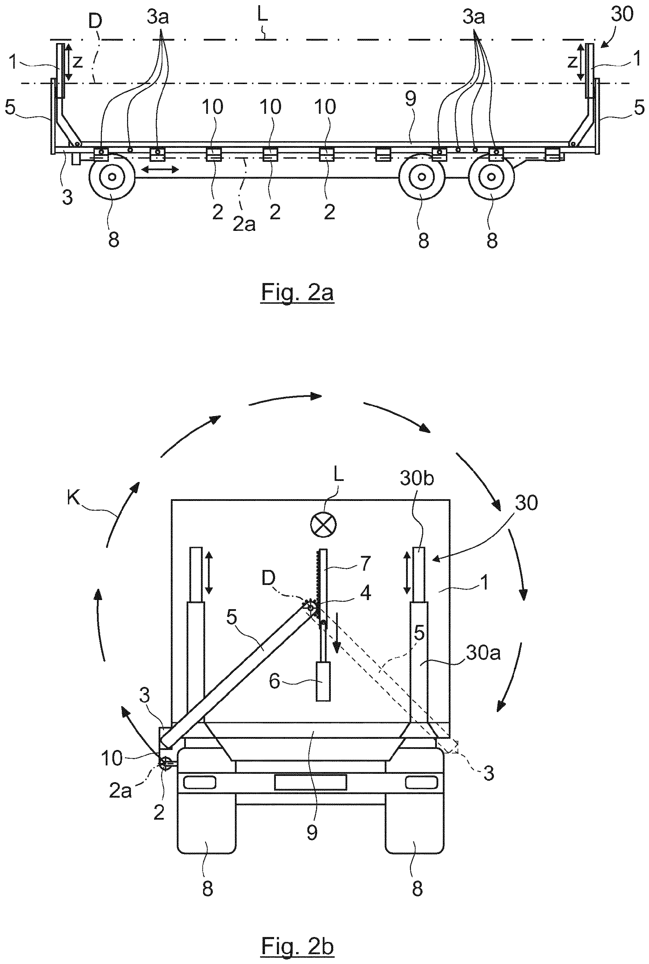

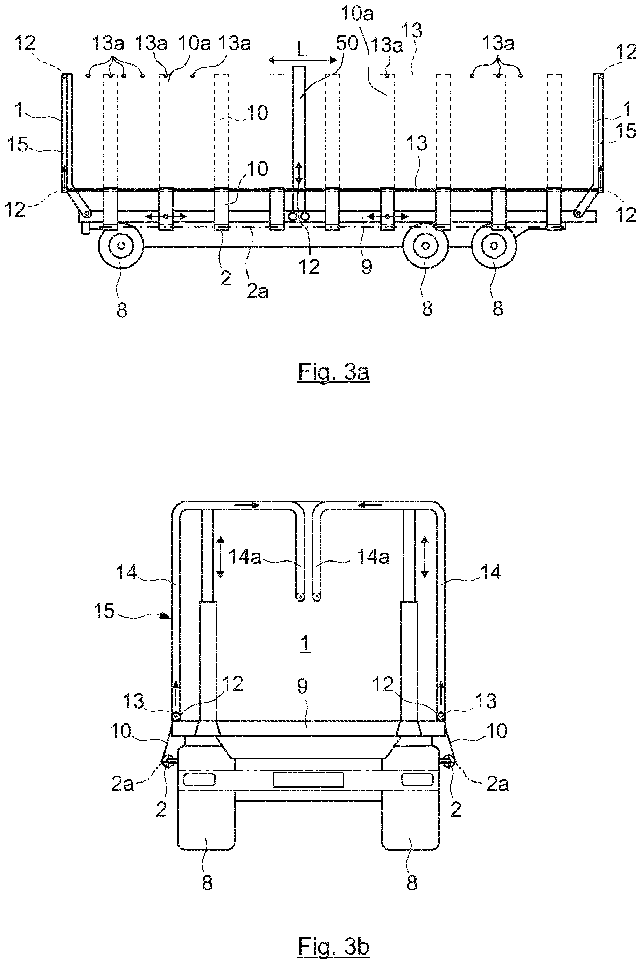

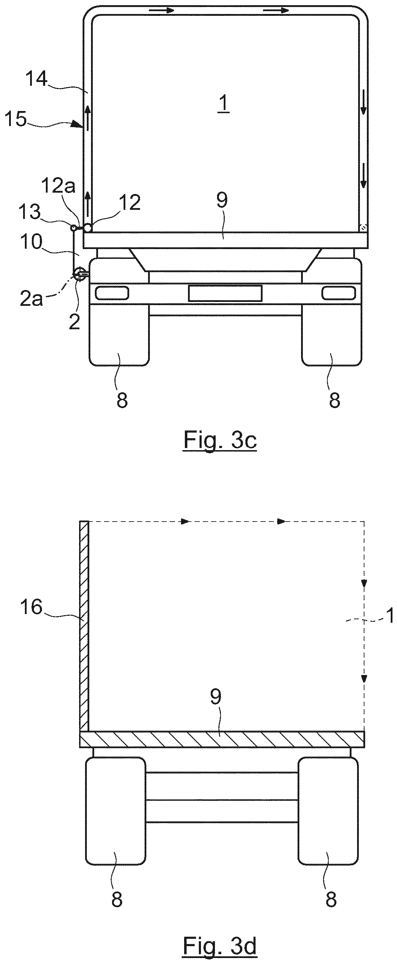

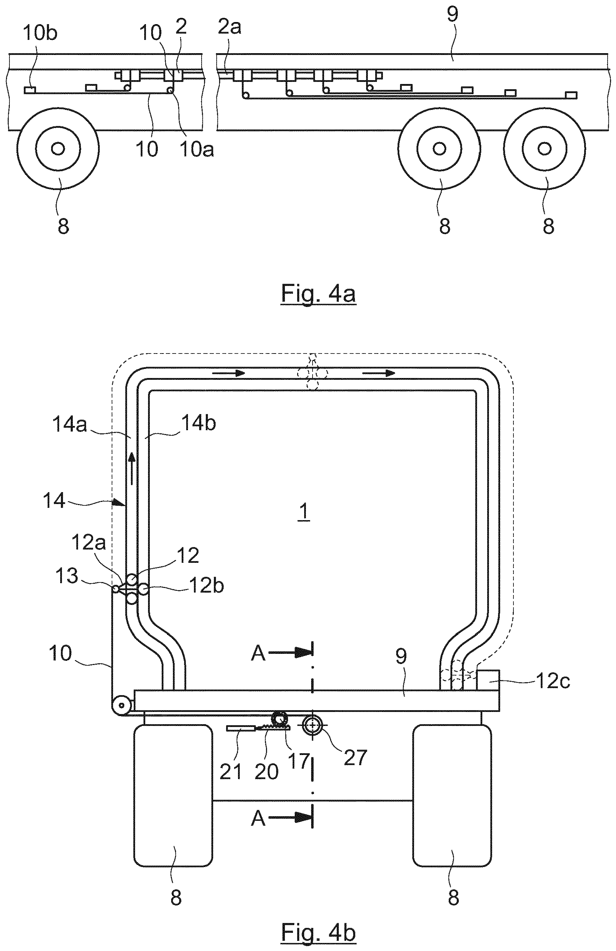

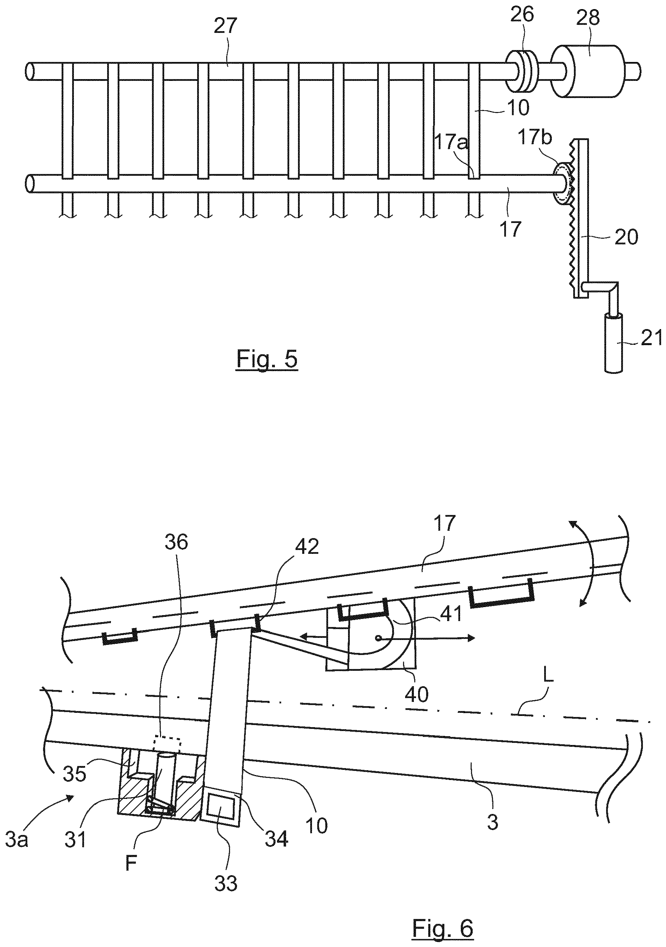

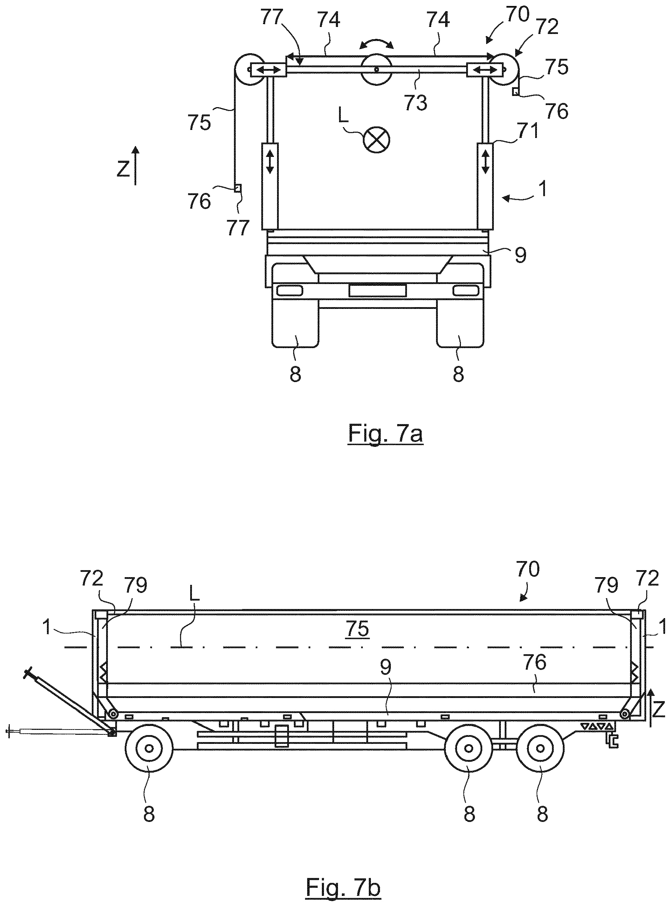

Die Figuren 2a und 2b zeigen eine erste erfindungsgemäße Variante eines Transportwagens in Seiten- bzw. Rückansicht, während die Figuren 3a, 3b eine zweite erfindungsgemäße Variante eines Transportwagens in Seiten- bzw. Rückansicht zeigen. In den Figuren 3c und 3d sind zwei weitere erfindungsgemäße Varianten eines Transportwagens in Rückansicht gezeigt. Die Figuren 4a bis 4c stellen weitere erfindungsgemäße Varianten eines Transportwagens in Rückansicht bzw. in einer teilgeschnittenen Ansicht (Figur 4a) dar, während die Figur 5 eine Spanneinrichtung des erfindungsgemäßen Transportwagens detaillierter offenbart. Die Figur 6 zeigt schließlich weitere Details einer Spanneinrichtung und einer Befestigungseinrichtung des erfindungsgemäßen Transportwagens, während die Figuren 7a und 7b eine Variante mit einer zusätzlichen Abdeckplanenanordnung 70 zeigen. Übereinstimmende Merkmale wurden mit den gleichen Bezugszeichen referenziert.

Bei der ersten Variante eines erfindungsgemäßen Transportwagens ist jeweils an dem Querseitenteil 1 des erfindungsgemäßen Transportwagens eine Fördereinrichtung vorgesehen, die einen Haltearm 5 umfasst. Zwischen den Haltearmen 5 erstreckt sich entlang der Längserstreckung des Transportwagens eine Führungsstange 3, die bei einer Drehbewegung der Haltearme 5 um eine Drehachse D eine kreisförmige Verlagerungsbewegung K ausführt (vgl. Figur 2b).

Wie in der Figur 2a durch die Pfeile Z angedeutet und in der Figur 2b deutlicher zu erkennen, sind die Querseitenteile 1 mit einer Anordnung versehen, die es ermöglicht diese relativ zu der Ladeplattform nach oben und unten, d.h. in einer Richtung Z senkrecht zur Ladeplattform zu verlagern. Hierzu kann beispielsweise eine Teleskopiereinrichtung 30 vorgesehen sein, wobei ein erstes Teil 30a fest mit dem Fahrzeugrahmen 9 verbunden ist, und ein zweiter hierzu teleskopierbares Teil 30b fest mit dem zugehörigen Querseitenteil 1 verbunden ist.

Dadurch dass bei dieser Ausführungsform das gesamte Querseitenteil relativ zu der Ladeplattform verlagert werden kann, ist es nicht nötig, eine Änderung an der Fördereinrichtung des Transportwagens vorzunehmen, was einen großen Vorteil darstellt. In alternativen Ausführungsformen kann auch nur ein Abschnitt der Querseitenteile relativ zu der Ladeplattform verlagerbar sein. Vorteilhaft ist dies ebenfalls der Abschnitt an dem die Fördereinrichtung des Transportwagens angebracht ist.

Mittels der in der Höhe verstellbaren Querseitenteile kann eine zusätzliche Anpassung des Transportwagens und insbesondere der Spannvorrichtung an unterschiedliche Beladungszustände erreicht werden.

Die Verlagerung kann mittels eines Antriebs, beispielsweise mittels eines elektrischen Motors, eines hydraulischen oder pneumatischen Antriebs erfolgen.

An der Führungsstange 3 sind die freien Enden mehrerer gurtförmiger Spannmittel befestigt. Diese werden bei einer Verlagerung der Führungsstange 3 entsprechend mit dieser mitbewegt. Die gurtförmigen Spannmittel sind ihrerseits auf Gurtrollen 2 aufgewickelt und können infolge der kreisförmigen Verlagerungsbewegung der Führungsstange von den Gurtrollen 2 abgewickelt werden. Hierzu sind die Gurtrollen 2 auf einer Achse 2a drehbar angeordnet.

Die beiden Querseitenteile 1 stützen nicht nur die Haltearme 5 der Fördereinrichtung, sondern auch eine für diese vorgesehene Antriebseinrichtung, welche sich in dem dargestellten Beispiel aus einem hydraulischen Zylinder 6 und einer gezahnten Antriebsstange 7 zusammensetzt und durch eine Kraftübertragung im Kraftangriffspunkt 4 eine Schwenkbewegung des Haltearms 5 um die Drehachse D veranlasst.

Grundsätzlich ist es jedoch selbstverständlich ebenfalls denkbar, anstelle der gezeigten Antriebseinrichtung ein alternatives System zum Antrieb der Haltearme 5 bereitzustellen, beispielsweise einen elektrischen Motor, einen hydraulischen oder pneumatischen Antrieb.

Wie in der Figur 2a weiterhin angedeutet, lassen sich bei der gezeigten Ausführungsform auch die auf die Gurtrollen 2 aufgewickelten gurtförmigen Spannmittel 10 in Richtung der Längsachse L relativ zu der Ladeplattform verschieben. Hierzu können die Gurtrollen frei verschiebbar auf einer separaten Welle oder auf einer Komponente des Wagenrahmens 9, die sich in Längsrichtung L erstreckt, gelagert sein.

Die freien Enden der Spannmittel 10 können von der Führungsstange 3 (oder in der Ausführungsform der Figuren 3a und 3b einem Führungsseil) gelöst bzw. abgekoppelt werden und in einer neuen Relativposition wieder mit dieser (oder diesem) verbunden werden. Hierzu können, wie in der Figur 2a angedeutet, definierte Befestigungspunkte 3a an der Führungsstange 3 (analog Befestigungspunkte 13a an dem Führungsseil 13) vorgesehen sein, welche in gleichen Abständen zueinander oder ungleichmäßig verteilt vorgesehen sein können. So ist es denkbar, dass in Ladezonen, in denen üblicherweise schwerere Ladegüter aufgeladen werden, z.B. in Fahrtrichtung im vorderen Bereich, mehr Befestigungspunkte in kürzeren Abständen zueinander vorgesehen sind, als in Ladezonen, in denen üblicherweise weniger schwere Ladegüter aufgeladen werden sollen. Sinnvollerweise können mehr Befestigungspunkte 3a als Spannmittel 2 vorgesehen sein, um eine Repositionierung der Spannmittel 2 zu ermöglichen. Die Anzahl der Befestigungspunkte kann dabei ein Vielfaches der Spannmittel 2 betragen, beispielsweise können zweimal, dreimal oder viermal so viele Befestigungspunkte 3a vorgesehen sein oder auch noch mehr.

In der Figur 6 ist beispielhaft eine Ausgestaltungsvariante eines Befestigungspunktes 3a an einer Führungsstange 3 gezeigt, weitere Befestigungspunkte wurden zur Vereinfachung der Darstellung in der Figur 6 weggelassen. In der gezeigten Ausgestaltungsvariante umfasst der freigeschnittene Befestigungspunkt 3 einen mittels einer Feder F (Spiralfeder, Blattfeder oder anderes elastisches Element) federnd vorgespannten Befestigungsbolzen 31 in einer Ausnehmung 32, der gegen die Führungsstange 3 federnd vorgespannt ist. Das Spannmittel 10, in der gezeigten Ausführungsform ein Spanngurt, umfasst an seinem freien Ende eine Ausnehmung 33 in einem verstärkten Bereich 34 vorgesehen ist, in die in einem befestigten Zustand der Befestigungsbolzen 31 einzugreifen vermag. Das Spannmittel 10 wird folglich mit seinem freien Ende in dem Befestigungspunkt 3a in den vorgesehenen Zwischenraum 35 zwischen Befestigungsbolzen 31 und Führungsstange 3 eingeschoben und verdrängt den federnd vorgespannten Bolzen 31. Dieser greift dann in die Ausnehmung 33 ein und sichert so das Spannmittel 10. Für eine bessere Fixierung kann zusätzlich eine zusätzliche Sicherungsausnehmung 36 an der Führungsstange 3 vorgesehen sein, in die der Befestigungsbolzen (manuell oder infolge der federnden Vorspannung) vorgeschoben werden kann, um ein unerwünschtes Lösen zu unterbinden. Je nach Ausgestaltung kann ein zusätzliches Betätigungselement vorgesehen sein, mittels dessen der Bolzen wieder in eine ungesicherte Position zurückgeführt werden kann, in der das Spannmittel 10 gelöst werden kann.

Alternative Möglichkeiten der lösbaren Kopplung der Spannmittel 10 an der Führungsstange 3 sind selbstverständlich ebenfalls denkbar. Auch bei der Ausgestaltung mit einem Führungsseil 13 sind andere Lösungen denkbar, beispielsweise Karabinerhaken oder dergleichen an den freien Enden der Spannmittel 10 und Ösen zum Einhängen als Befestigungspunkte 13a an dem Führungsseil 13. Auch eine Umkehrung der beispielhaft beschriebenen und gezeigten Varianten ist denkbar, d.h. eine Ausnehmung an der Führungsstange 3, in die ein Befestigungsglied am Spannmittel 10 eingeklinkt werden kann oder Haken am Führungsseil als Befestigungspunkte, die in Ausnehmungen am Spannmittel 10 fixierend eingreifen können.

Bei der zweiten Ausführungsform der Figuren 3a und 3b sind im Bereich der Querseitenteile 1 keine Haltearme 5 angeordnet, welche um eine Drehachse D bewegt werden. Stattdessen umfassen die Querseitenteile jeweils einen Halterahmen 15, der eine oder mehrere Führungsschienen 14 aufweisen kann (vgl. Figur 3b). Im Unterschied zu der ersten Ausführungsform ist ferner, wie bereits vorstehend angedeutet, zwischen den beiden Halterahmen 15 keine Führungsstange, sondern ein Führungsseil 13 gespannt, das mit seinen Endabschnitten mit Führungsteilen 12 verbunden ist. Die Führungsteile 12, beispielsweise in der Form von Bolzen oder dergleichen, sind ihrerseits in den Führungsschienen 14 der Halterahmen 15 verschiebbar und geführt aufgenommen. Durch eine Verlagerung der Führungsteile 12 in dem vorderen und dem hinteren Halterahmen 15 wird in ähnlicher Weise wie bei der ersten Erfindungsvariante eine Verlagerung des Führungsseils 13 veranlasst, wodurch die damit verbundenen freien Enden der gurtförmigen Spannmittel 10 ebenfalls entsprechend verlagert werden.

Die Führungsteile 12 können selbstverständlich auch in den Führungsschienen 14 fixierbar ausgebildet sein, beispielsweise durch Vorsehen eines Feststellmechanismus in Form einer Stellschraube oder dergleichen.

Auch bei dieser Variante sind die gurtförmigen Spannmittel 10 auf Gurtrollen 2 aufgerollt und können von diesen abgerollt werden.

Bei einer besonders komfortablen Ausführungsform kann vorgesehen sein, dass die Gurtrollen 2 bei beiden Varianten der vorliegenden Erfindung Teil einer Spanneinrichtung zum Spannen der gurtförmigen Spannmittel sind. Eine solche Spanneinrichtung kann beispielsweise eine Hohlwelle umfassen sowie eine darin angeordnete Achse, auf der das wenigstens eine Spannmittel durch Drehbewegung der Achse relativ zu der Hohlwelle auf- und abwickelbar ist. Dabei kann die Drehbewegung der Achse beispielsweise motorisch angetrieben oder manuell eingeleitet werden.

Alternativ zu dieser Ausgestaltungsvariante einer Spanneinrichtung ist in Figur 5 eine weitere Ausführungsform dargestellt. Die dort gezeigte Spanneinrichtung umfasst anstelle der Achse 2a eine angetriebene Welle 27 zum Auf- und Abwickeln der gurtförmigen Spannmittel 10. Die gurtförmigen Spannmittel 10 können wie bei anderen Ausführungsformen auf Gurtrollen aufgewickelt sein, welche mit der Welle 27 drehfest verbunden sind, oder aber an einem ihrer freien Enden mit der Welle 27 verbunden sein. Die Welle 27 kann beispielsweise hydraulisch über einen schematisch dargestellten hydraulischen Antrieb 28 angetrieben werden. An der Schnittstelle zwischen der Welle 27 und den Spannmitteln 10 können Drehmomentbegrenzer 26 vorgesehen sein, wie beispielsweise eine Rätsch- oder Rutschkupplung oder dergleichen, die der Überlastsicherung der Welle 27 und dem zugehörigen Antrieb 28 dienen.

Zusätzlich zu der Welle 27 ist eine sogenannte Spannwelle 17 vorgesehen, die zum automatischen Spannen und insbesondere Sichern der gespannten gurtförmigen Spannmittel 10 dient. Hierzu weist die Spannwelle 17 eine oder mehrere schlitzförmige Öffnungen 17a auf, durch die sich die gurtförmigen Spannmittel 10 durch die Welle 27 hindurch erstrecken können. In einer Ausgangsstellung verlaufen die gurtförmigen Spannmittel 10 gerade durch die Spannwelle 17.

Soll die Spannwelle 17 jedoch zum Nachspannen oder insbesondere zur Sicherung der gurtförmigen Spannmittel 10 genutzt werden, wird die Spannwelle 17 um einen vorbestimmten Winkel um ihre Längsachse gedreht, wodurch die sich durch die wenigstens eine schlitzförmige Öffnung 17a erstreckenden gurtförmigen Spannmittel 10 in Anlage an die äußere Oberfläche der Spannwelle 17 gebracht werden.

Zum Drehen der Spannwelle 17 kann beispielsweise, wie in der Fig. 5 gezeigt, ein zusätzlicher Antrieb genutzt werden, der in der dargestellten Ausführungsform eine Zahnstange 20 umfasst, welche mittels eines hydraulischen Zylinders 21 in translatorische Bewegung versetzt werden kann. Ein damit in Eingriff stehendes Zahnrad 17b, welches mit der Spannwelle 17 verbunden oder integral an dieser ausgebildet ist, wird hierdurch in eine rotatorische Bewegung überführt.

In einer gewünschten Stellung der Spannwelle 17, in der die gurtförmigen Spannmittel 10 gespannt sind und an der Außenoberfläche der Spannwelle 17 anliegen, kann die Spannwelle 17 selbst oder aber eine Antriebskomponente der Spannwelle 17 in ihrer Stellung gesichert werden. Hierbei ist beispielsweise eine mechanische Verriegelung der Zahnstange 20 denkbar, die beispielsweise mit einem Bolzen oder dergleichen am Wagenrahmen 9 verriegelt werden kann. Alternativ ist es jedoch auch denkbar, an dem hydraulischen Antrieb ein entsprechendes Sperrventil vorzusehen, das die Zahnstange 20 zuverlässig in ihrer gewünschten Stellung hält. Weitere alternative Ausgestaltungsmöglichkeiten sind selbstverständlich ebenfalls denkbar.

Eine weitere vorteilhafte Variante (gezeigt in Figur 6) sieht vor, dass die Spannmittel, insbesondere Spanngurte 10, in einem Rollenkasten aufgenommen, d.h. aufgerollt sind. Dieser kann eine Feder 41 umfassen, die in einem entspannten Zustand ist, wenn das Spannmittel 10 komplett aufgerollt ist und in einen gespannten Zustand überführt wird, wenn dieser abgerollt wird. Somit dient die Feder 41 dem automatischen Nachspannen des Spannmittels 10. Alternativ oder zusätzlich kann das Nachspannen auch mittels eines zusätzlichen Antriebs erfolgen, wobei jedem Spannmittel ein eigener, variabel steuerbarer Antrieb zugeordnet sein kann. Ein solcher zusätzlicher Antrieb kann auch die Funktion des Sicherns des gespannten Spannmittels übernehmen.

Zum zusätzlichen Sichern des Spannmittels 10 in einer gewünschten Position und zum Nachspannen sind gemäß einer weiteren Ausführungsvariante (vgl. Figur 6), alternativ zu der schlitzförmigen Öffnung 17a, Spannbügel 42 an der Spannwelle 17 vorgesehen, durch welche die Spannmittel 10 geführt werden können. In einer Ausgangsstellung verlaufen die gurtförmigen Spannmittel 10 gerade durch die zugehörigen Spannbügel 42 der Spannwelle 17. Sollen die Spannmittel 10 nachgespannt und hierüber gesichert werden (Haftreibung), wird die Spannwelle 17 wiederum mittels eines Antriebs um einen vorbestimmten Winkel um ihre Längsachse gedreht, wodurch die sich durch die Spannbügel 42 erstreckenden gurtförmigen Spannmittel 10 in Anlage an die äußere Oberfläche der Spannwelle 17 gebracht werden.

Um eine sichere Anlage der gurtförmigen Spannmittel 10 an der Außenoberfläche der Spannwelle 17 zur Sicherung der Spannmittel 10 zu gewährleisten, kann diese zumindest in den Bereichen, in denen die gurtförmigen Spannmittel 10 zur Anlage gelangen können, eine verbesserte Haftreibung bereitstellen. Dies kann durch eine entsprechende Oberflächenstruktur der Spannwelle selbst oder durch zusätzliche Elemente, die an der Spannwelle angebracht werden können, erfolgen. Beispielsweise kann die Spannwelle in ihrer Außenumfangsfläche aufgeraut sein, eine Beschichtung (beispielsweise eine Gummierung) aufweisen oder es können schalenförmige Gummielemente, Elemente mit Spikes oder dergleichen an der Spannwelle 17 angebracht sein. Die zusätzlichen Elemente, wie beispielsweise schalenförmige Gummielemente, können beispielsweise durch Verschraubung, Verklebung oder dergleichen an der Spannwelle 17 angebracht sein.

Insbesondere bei den Ausführungsformen, bei denen eine solche zusätzliche Spannwelle 17 zur Sicherung der gurtförmigen Spannmittel 10 vorgesehen sein soll, ist eine Anordnung der Spanneinrichtung am Unterboden des Transportwagens besonders günstig und platzsparend. Eine solche Anordnung ist beispielsweise in der Figur 4b gezeigt. Weiterhin kann mittels einer zusätzlichen Spannwelle 17 ein Nachspannen der Spanmittel jederzeit erfolgen, ohne dass hierfür die Fixierung der Spannmittel gelöst werden muss.

Wie jedoch anhand der Figur 4a dargestellt, welche eine entlang der Linie A-A geschnittene Ansicht der Figur 4b ist, ergibt sich hieraus ein weiteres technisches Problem. So ist bei einer entsprechenden Anordnung die maximale Erstreckung der Komponenten der Spanneinrichtungen in Längsrichtung (d.h. parallel zu der Längsachse der Ladeplattform) durch die Radachsen der Räder 8 des Transportwagens begrenzt. Da jedoch auch der Bereich der Ladeplattform zur Aufnahme und Sicherung von Stückgut genutzt werden soll, der sich oberhalb der Radachsen der Räder 8 des Transportwagens befindet, ist es notwendig, wenigstens eines der gurtförmigen Spannmittel 10 zumindest abschnittsweise aus dem Bereich zwischen den Radachsen in einen Bereich über den Radachsen umzulenken. Hierzu kann erfindungsgemäß eine Umlenkeinrichtung vorgesehen sein.

Diese umfasst in der dargestellten Ausführungsform für jedes umzulenkende gurtförmige Spannmittel 10 ein paar Umlenkrollen, die zum Umlenken und Verschränken des gurtförmigen Spannmittels 10 dienen. So wird ein gurtförmiges Spannmittel 10, das sich im Wesentlichen senkrecht zu der Längsachse des Transportwagens aus dem Bereich zwischen den Radachsen heraus erstreckt mit einer ersten Umlenkrolle 10a verschränkt und um 90° umgelenkt, so dass sich dieses nunmehr im Wesentlichen parallel zu der Längsachse des Transportwagens und damit auch der Ladeplattform (nach vorne oder hinten) erstreckt. Mittels der zweiten Umlenkrolle 10b kann das Spannmittel 10 erneut verschränkt und zugleich um 90° umgelenkt werden, so dass das gurtförmige Spannmittel 10 nunmehr wieder quer, d.h. etwa in einem 90°-Winkel zu der Längsachse der Ladeplattform verläuft. Ausgehend hiervon kann das umgelenkte Spannmittel 10 auch beispielsweise im Bereich oberhalb der Radachsen, d.h. über den Rädern 8, zum Spannen von entsprechendem Stückgut genutzt werden.

Anstelle der in der Figur 3b gezeigten zwei Führungsschienen 14, die einen Abschnitt aufweisen, welcher in den Laderaum des Transportwagens hineinragt (Abschnitt 14a in Figur 3b), kann auch eine einzige umlaufende Führungsschiene oder eine im Wesentlichen umlaufende Führungsschiene vorgesehen sein, wie beispielsweise in der Figur 3c dargestellt. Weiterhin kann, wie ebenfalls bei der Ausführungsform der Figur 3c gezeigt, zwischen dem jeweiligen Führungsteil 12 und dem Führungsseil 13 ein Verbindungsteil 12a vorgesehen sein, das einen größeren Umreifungsradius durch die gurtförmigen Spannmittel bereitstellt (vgl. Figur 3c). Ein solches Verbindungsteil 12a kann beispielsweise als starre Stange ausgebildet sein und ist mit einem Ende mit dem Führungsteil 12 verbunden, während es an dem anderen Ende zur Aufnahme eines Abschnitts des Führungsseils 13 ausgebildet ist.

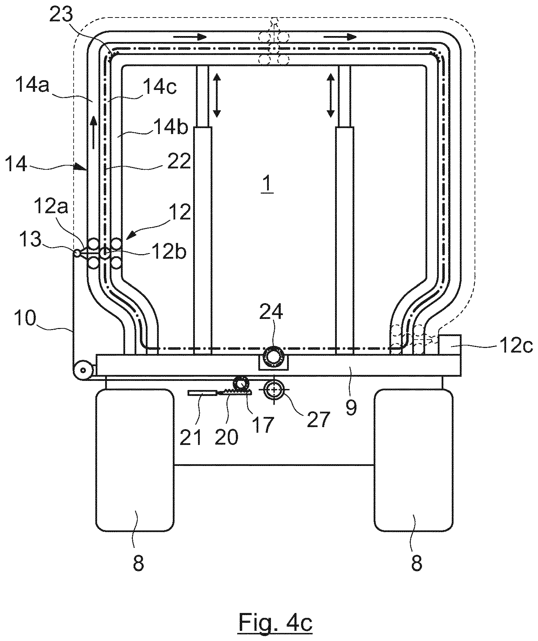

Bei der Ausführungsform der Figur 4b und der Ausführungsform der Figur 4c erkennt man, dass anstelle einer einzigen Führungsschiene wenigstens zwei oder sogar drei nebeneinander laufende Schienen 14a, 14b und 14c als Führungsschiene 14 vorgesehen sind. Die zusätzlichen Schienen 14b dienen dabei zur Führung einer oder mehrerer Kraftausgleichsrollen 12b (in Figur 4c zwei), die ein Verkippen des Verbindungsteils 12a und damit ein Durchhängen des Führungsseils verhindern soll bzw. sollen. Hierzu wird über diese eine zu einer Verkippbewegung gegenläufige Haltekraft in das damit verbundene Verbindungsteil 12a eingeleitet. Die Ausgestaltung als Rollen ist dabei insbesondere vorteilhaft, da diese reibungsarm in der Führungsschiene 14b geführt werden können, wenn das Führungsseil 13 verlagert werden soll. Dabei kann eine einzige Kraftausgleichsrolle 12b (Figur 4b) oder es können mehrere Kraftausgleichsrollen 12b (Figur 4c) vorgesehen sein. In gleicher Weise kann das Führungsteil 12 selbst als Rolle oder mit Rollen versehen sein, um einen reibungsarmen Lauf in der Führungsschiene 14a zu gewährleisten.

Wie in Figur 4c gezeigt kann die dritte Führungsschiene 14c zur Aufnahme und Führung eines Antriebsmittels, wie vorliegend einer Antriebskette 22 genutzt werden. Dabei können in den Umlenkbereichen, in denen die Führungsschiene 14a einen Radius aufweist alternativ oder zusätzlich zu dem vorgesehenen Radius Umlenkrollen 23 für die Antriebskette 22 vorgesehen sein. Die Antriebskette 22 kann, wie gezeigt, über wenigstens ein Antriebsrad 24 angetrieben werden. Die Umlenkrollen 23 und das wenigstens eine Antriebsrad 24 können zudem mit einer Außenverzahnung versehen sein, um einen definierten Eingriff in die Antriebskette 22 und eine verlustarme Kraftübertragung zu ermöglichen. Die Antriebskette 22 selbst ist wiederum mit dem Verbindungsteil 12a, dem Führungsteil 12 und/oder den Kraftausgleichsrollen 12b verbunden. Besonders vorteilhaft, um ein Verkanten der geführten Anordnung zu vermeiden, ist die in der Figur 4c gezeigte Anordnung, in der die Antriebskraft zwischen den rollenförmig ausgebildeten Führungsteilen 12 und den Kraftausgleichsrollen 12b eingeleitet wird.

Ein weiteres Detail der Ausführungsform der Figur 4b und 4c ist in der Kröpfung der Führungsschienenanordnung 14 im Übergangsbereich zu der Ladeplattform zu erkennen. Diese dient zur Sicherung der Führungsanordnung, insbesondere des Verbindungsteils 12a, das in seiner Ausgangsstellung (wenn die Ladung ungesichert ist) und in seiner Betriebsstellung (wenn die Ladung gesichert ist und das Führungsseil 13 oder die daran angebrachten Spannmittel 10 gesichert sind) nicht wesentlich über die seitlichen Abmessungen der Ladeplattform hinausragt und somit vor einem ungewollten Abreißen oder Verbiegen geschützt ist.

Die Fixierung des Führungsseils 13 und/oder der Spannmittel 10 kann auf unterschiedlichste Weise erfolgen, beispielsweise mechanisch mit einem Bolzen oder dergleichen (angedeutet durch die Fixiereinheit 12c) oder aber durch die Fördereinrichtung, die ihrerseits in der gewünschten Stellung gesichert werden kann, wie bereits vorstehend im Zusammenhang mit der Spanneinrichtung der Figur 5 beschrieben.

Es kann, wie vorstehend bereits angedeutet, ferner ausreichen, wenn die Führungsschiene 14 so weit von einer Längsseite des Transportwagens zur gegenüberliegenden Längsseite umläuft, dass die Ladung fixiert ist bzw. das Führungsseil von einer auf dem Boden stehenden Bedienperson erreicht werden kann.

Auch ist bei einer weiteren Ausführungsform gemäß der Figur 3d denkbar, dass an einer der Längsseiten eine starre Seitenwand 16 vorgesehen ist, die die Ladeplattform des Wagenrahmens 9 an einer ihrer Längsseiten begrenzt. Von dieser starren Seitenwand lassen sich die Spannmittel zumindest soweit umspannen, dass die Ladung fixiert ist bzw. das Führungsseil von einer auf dem Boden stehenden Bedienperson erreicht werden kann. Zum teilweise oder vollständigen Umspannen des geladenen Stückguts kann erfindungsgemäß sowohl eine Fördereinrichtung mit wenigstens einem Haltearm (vgl. Figuren 2a, 2b) als auch eine Fördereinrichtung mit wenigstens einem Halterahmen (vgl. Figuren 3a bis 3c) genutzt werden.

Die Fixierung der Spannmittel in der gewünschten Position kann bei jeder der vorstehend beschriebenen Ausführungsformen mithilfe der Fördereinrichtung selbst, die diese in der gewünschten Position hält, oder mittels einer zusätzlichen Fixiereinheit erreicht werden. Letztere kann insbesondere als mechanische Fixiereinheit 12c (vgl. Figur 4a, 4b) ausgebildet sein, die einen Bolzen, einen Haken oder dergleichen umfassen kann.

Selbstverständlich kann auch bei der ersten Variante der Figuren 2a, 2b anstelle einer Führungsstange ein Führungsseil verwendet werden. Gleichermaßen gilt umgekehrt, dass auch bei der zweiten Variante der Figuren 3a bis 3d das Vorsehen einer Führungsstange anstelle des Führungsseils sinnvoll sein kann.

Schließlich ist in der Figur 3 eine weitere Besonderheit der vorliegenden Erfindung zu erkennen. Insbesondere bei Transportwägen, deren Ladefläche in Richtung der Längsachse eine Länge von 10 Meter oder mehr aufweist, kann es sinnvoll sein, dass die Führungsstange 3 oder das Führungsseil 13 über einen zusätzlichen Stützbügel 50 abgestützt ist, der zwischen den Querseitenteilen angeordnet ist. Dieser kann in einer Position fest mit dem Transportwagen verbunden sein oder relativ zu der Ladefläche in Richtung der Längsachse L verschiebbar, wie in der Figur 3a durch einen Doppelpfeil angedeutet. Eine entsprechende Verschiebung des Stützbügels 50 kann mittels eines ansteuerbaren Antriebs (nicht dargestellt) erfolgen oder manuell durch den Anwender. Auch kann der Stützbügel in einer gewünschten Position gesichert werden, beispielsweise über den Antrieb oder eine zusätzliche Sicherung in Form von Sicherungsmitteln, wie Bolzen oder dergleichen, die in vorgegebenen Positionen des Stützbügels diesen an dem Wagenrahmen fixieren können.

Der Stützbügel 50 kann in gleicher Weise wie die Querseitenteile eine Fördereinrichtung mit wenigstens einem Halterahmen (vgl. Figuren 3a bis 3c) mit einem Führungsteil 12 aufweisen, um die Führungsstange oder das Führungsseil entsprechend verlagern zu können (angedeutet durch den Pfeil in Figur 3a). Weiterhin kann er in gleicher Weise wie die Querseitenteile in einer Richtung Z senkrecht zur Ladeplattform verstellbar sein, insbesondere wie gezeigt können die sich in Richtung Z erstreckenden Streben des Stützbügels 50 teleskopierbar ausgestaltet sein. Auf diese Weise kann eine gleichmäßige Anpassung an unterschiedliche Beladungszustände erreicht werden.

Durch die vorliegende Erfindung kann vorteilhaft sichergestellt werden, dass ein einziger Anwender mehrere gurtförmige Spannmittel gleichzeitig um die auf der Ladeplattform geladenen Stückgüter spannen kann, um diese zu sichern. Hierdurch wird der aus dem Stand der Technik bekannte Nachteil eines hohen Arbeitsaufwandes zur Sicherung des Stückguts vermieden, während zugleich eine verbesserte Flexibilität der bekannten Spannmittel zum Sichern unterschiedlichster Ladung bereitgestellt ist.

Um das geladene und gesicherte Stückgut zusätzlich vor Witterungseinflüssen, insbesondere Regen zu schützen, kann zusätzlich eine automatische Planenabdeckung vorgesehen sein, wie sie beispielsweise aus dem Stand der Technik (vgl. beispielsweise US 8,226,150 B1 oder US 7,189,042 B1) bekannt ist.

Bei einer denkbaren Ausgestaltungsvariante einer solchen Planenabdeckung ist es ebenfalls möglich, dass die Planenabdeckung mit dem Vergurtungssystem gekoppelt ist, um so eine gleichzeitige Sicherung des geladenen Stückguts mit den Spannmitteln und einen Schutz der geladenen Stückguts vor Regen bereitzustellen. So kann beispielsweise eine (zusätzliche) Abdeckplane in gleicher Weise wie die Spannmittel von einer Längsseite der Ladeplattform von der Fördereinheit des Vergurtungssystems mitgenommen und zumindest abschnittsweise um das geladene Stückgut herum geführt werden.

Beispielhaft ist eine weitere alternative Ausgestaltung einer Abdeckplanenanordnung 70 in den Figuren 7a und 7b gezeigt. Demgemäß sind an den Querseitenteilen 1 teleskopierbare Arme 71 angebracht, an denen jeweils ein Haltewinkel 72 befestigt ist. Die beiden Haltewinkel 72 sind wiederum mit Querstangen 73 verbunden, um eine Abdeckplane 74 von oben aufzulegen bzw. zu befestigen. Die Querstangen 73 sind in der gezeigten Ausführungsvariante teleskopierbar ausgestaltet und können somit in ihrer Erstreckung quer, insbesondere senkrecht, zur Längsachse L verlängert oder verkürzt werden. Hierzu sind die Querstangen 73 mit wenigstens zwei Teilen versehen, die relativ zueinander bewegbar sind und wobei eines der Querstangenteile zumindest in einem eingefahrenen Zustand abschnittsweise in dem jeweils anderen Querstangenteil aufgenommen ist. Die obere Abdeckplane 74 kann ausrollbar ausgestaltet sein und entsprechend weiter abgerollt oder wieder aufgerollt werden.

Mittels dieser in der Erstreckung quer zur Längsachse L verlängerten Ausgestaltungsvariante wird ermöglicht, dass der Fördereinheit beim Spannen der Spannmittel des Vergurtungssystems nicht behindert wird. Dabei kann die obere Abdeckplane 74 von einer Welle abgerollt werden, die sich an einem der Haltewinkel 72 befindet. Alternativ kann die obere Abdeckplane 74 auch von einer zentral zwischen den Haltewinkeln 72 angeordneten Welle (die sich in Längsrichtung L erstreckt) achssymmetrisch zur Längsachse L abgerollt und wieder aufgerollt werden (vgl. Figur 7a).

Alternativ zu einer auf- und abrollbaren oberen Abdeckplane kann die Abdeckplane auch mit einer Überlapptasche (ähnlich einem Faltebalg) ausgestaltet sein, die derart bemessen ist, dass die obere Abdeckplane im vollständig ausgefahrenen Zustand der Querstangenteile von diesen mitgenommen wird und in der Richtung quer, insbesondere senkrecht, zur Längsachse L gespannt ist. In eingefahrenem Zustand wird die Überlapptasche ausgebildet, d.h. die Abdeckplane weist einen Bereich auf, in dem sich Teile der Abdeckplane überlappen. So kann die Überlapptasche insbesondere in dem Bereich ausgebildet sein, in dem das eine Querstangenteil in dem jeweils anderen Querstangenteil aufgenommen ist. Dabei kann das eine relativ zu dem anderen verschiebbare Querstangenteil die obere Abdeckplane bei seiner Einschubbewegung in das andere Querstangenteil mitnehmen und dadurch die Überlapptasche ausbilden. Die obere Abdeckplane kann auch als steifes Dachteil ausgebildet sein und zusätzlich flexible Abschnitte zur Ausbildung einer Überlapptasche wie vorstehend beschrieben aufweisen.

Weitere alternative Lösungen, beispielsweise mit einer elastischen oberen Abdeckplane oder elastischen Abschnitten der Abdeckplane sind selbstverständlich ebenfalls denkbar.

Je nach Ausgestaltung der oberen Abdeckplane 74 und ihrem Mechanismus zur Anpassung ihrer Erstreckung in einer Richtung quer zur Längsachse L, können beide seitlichen Enden der Abdeckplane fest an dem zugehörigen Haltewinkel 72 befestigt sein, kann das eine freie Ende der oberen Abdeckplane 74 an dem jeweils anderen Haltewinkel 72 lösbar befestigbar sein oder können beide symmetrisch angeordneten freien Enden der oberen Abdeckplane 74 an den beiden zugeordneten Haltewinkeln 72 lösbar befestigbar sein.

Die Seitenteile 75 der Abdeckplanenanordnung 70 können von einer Welle, die sich an oder in den Haltewinkeln 72 befindet, beispielsweise mittels eines Elektromotors als Antrieb, auf- und abgerollt werden. Am unteren Ende der Seitenteile 75 kann sich zusätzlich eine Haltestange 76 befinden, die eine definierte Position und Spannung der Seitenteile 75 ermöglicht. Im abgerollten Zustand können die freien Enden der Seitenteile 75 an der Ladeplattform oder in einem benachbarten Bereich hiervon lösbar befestigbar sein.

Wie auch das oder die freien Enden der oberen Abdeckplane 74 können auch die freien Enden der Seitenteile 75 beispielsweise mit Haken 77 oder dergleichen lösbar befestigt werden.

Die obere Abdeckplane 74 und die Seitenteile 75 können mittels eines Antriebs, beispielsweise eines Elektromotors oder dergleichen auf- und abgerollt werden. Auch ein manuelles Auf- und Abrollen ist denkbar. Weiterhin kann in den zugehörigen Wellen, auf welche die Teile 74, 75 der Abdeckplanenanordnung 70 aufgerollt werden, auch ein Federsystem zum automatischen Rückführen des abgerollten Planenteils vorgesehen sein (Rückholfeder), wie beispielsweise im Zusammenhang mit den gurtförmigen Spannmittels vorstehend beschrieben.

An den Querseitenteilen 1 können weiterhin Laufschienen 79 vorgesehen sein, in denen die Enden der Haltestangen 76 und/oder alternative Abschnitte der Seitenteile 75 geführt werden. Gleiches gilt für die Führung der oberen Abdeckplane 74.

Die Seitenteile 75 der Abdeckplanenanordnung 70 können von einer Welle, die sich an oder in den Haltewinkeln 72 befindet, beispielsweise mittels eines Elektromotors als Antrieb, auf- und abgerollt werden. Am unteren Ende der Seitenteile 75 kann sich zusätzlich eine Haltestange 76 befinden, die eine definierte Position und Spannung der Seitenteile 75 ermöglicht. Im abgerollten Zustand können die freien Enden der Seitenteile 75 an der Ladeplattform oder in einem benachbarten Bereich hiervon lösbar befestigbar sein.

Wie auch das oder die freien Enden der oberen Abdeckplane 74 können auch die freien Enden der Seitenteile 75 beispielsweise mit Haken 77 oder dergleichen lösbar befestigt werden.

Die obere Abdeckplane 74 und die Seitenteile 75 können mittels eines Antriebs, beispielsweise eines Elektromotors oder dergleichen auf- und abgerollt werden. Auch ein manuelles Auf- und Abrollen ist denkbar. Weiterhin kann in den zugehörigen Wellen, auf welche die Teile 74, 75 der Abdeckplanenanordnung 70 aufgerollt werden, auch ein Federsystem zum automatischen Rückführen des abgerollten Planenteils vorgesehen sein (Rückholfeder), wie beispielsweise im Zusammenhang mit den gurtförmigen Spannmittels vorstehend beschrieben.

An den Querseitenteilen 1 können weiterhin Laufschienen 79 vorgesehen sein, in denen die Enden der Haltestangen 76 und/oder alternative Abschnitte der Seitenteile 75 geführt werden. Gleiches gilt für die Führung der oberen Abdeckplane 74.

## Patentansprüche

1. Transportwagen für Stückgut mit einer Ladeplattform, auf die das Stückgut im Beladungszustand des Transportwagens aufgeladen ist, wobei sich die Ladeplattform entlang einer Längsachse (L) erstreckt, und mit einem Vergurtungssystem, das eine Sicherung des Stückguts auf der Ladeplattform ermöglicht und wenigstens ein Spannmittel (10) umfasst, das mithilfe einer zugeordneten Fördereinrichtung zumindest abschnittsweise um das auf der Ladeplattform aufgeladene Stückgut herumgeführt werden kann, um das aufgeladene Stückgut gegen die Ladeplattform zu spannen, wobei die Ladeplattform an ihren stirnseitigen Enden durch Querseitenteile (1) begrenzt ist, die die Fördereinrichtung des Vergurtungssystems umfassen,
**dadurch gekennzeichnet, dass** das wenigstens eine Spannmittel (10) relativ zu der Ladeplattform in Richtung der Längsachse (L) verschiebbar an dem Transportwagen befestigt ist.

2. Transportwagen nach Anspruch 1,
wobei das wenigstens eine Spannmittel (10) des Vergurtungssystems entlang einer der Längsseiten der Ladeplattform angeordnet ist und mithilfe der Fördereinrichtung zumindest abschnittsweise in einer Richtung quer zur Längserstreckung des Transportwagens um das auf der Ladeplattform aufgeladene Stückgut herumgeführt werden kann.

3. Transportwagen nach Anspruch 1 oder 2,
wobei das wenigstens eine Spannmittel (10) mit der Fördereinrichtung variabel koppelbar und von dieser entkoppelbar ist.

4. Transportwagen nach Anspruch 1, 2 oder 3,
wobei die Fördereinrichtung entlang der Längsachse (L) verteilt mehrere Befestigungspunkte (3a, 13a) aufweist, an denen das wenigstens eine Spannmittel (10) mit der Fördereinrichtung variabel koppelbar und von dieser entkoppelbar ist.

5. Transportwagen nach Anspruch 4,
wobei jeder der Befestigungspunkte (3a, 13a) der Fördereinrichtung ein federnd vorgespanntes Befestigungsglied (31) aufweist, das mit einer korrespondierenden Ausnehmung (33) an dem Spannmittel (10) zur Befestigung des Spannmittels (10) zusammenzuwirken vermag.

6. Transportwagen nach einem der vorhergehenden Ansprüche,
wobei das Vergurtungssystem wenigstens eine Spanneinrichtung zum Spannen des wenigstens einen Spannmittels (10) umfasst.

7. Transportwagen nach Anspruch 6,
wobei die Spanneinrichtung eine um ihre Längsachse drehbare Spannwelle (17) umfasst, auf der das wenigstens eine Spannmittel (10) durch Drehung der Spannwelle (17) zumindest abschnittsweise auf- und abwickelbar ist.

8. Transportwagen nach einem der Ansprüche 6 oder 7,
wobei die Spanneinrichtung in einem Bereich, in dem das wenigstens eine Spannmittel (10) auf eine Komponente der Spanneinrichtung auf- und abwickelbar ist, eine vergrößerte Haftreibung zwischen dieser Komponente der Spanneinrichtung und dem Spannmittel (10) bereitstellt.

9. Transportwagen nach einem der Ansprüche 6 bis 8,
wobei die Spanneinrichtung eine Antriebseinheit (28) zum drehenden Antrieb sowie optional eine Überlastsicherung umfasst.

10. Transportwagen nach einem der Ansprüche 6 bis 9,
wobei die Spanneinrichtung einen Spannbügel (42) zum Nachspannen des wenigstens einen Spannmittels (10) aufweist.

11. Transportwagen nach einem der vorhergehenden Ansprüche,
wobei die Fördereinrichtung wenigstens ein Führungsseil (13) und/oder eine Führungsstange (3) umfasst, mit dem oder mit der das wenigstens eine Spannmittel (10) in der Weise verbindbar ist, dass es mittels des Führungsseils (13) und/oder der Führungsstange (3) zumindest abschnittsweise um das auf der Ladeplattform aufgeladene Stückgut herumgeführt werden kann.

12. Transportwagen nach einem der vorhergehenden Ansprüche,
wobei Abschnitte der Querseitenteile (1), die die Fördereinrichtung des Vergurtungssystems umfassen, relativ zu der Ladeplattform in einer zu der Ladeplattform senkrechten Richtung (Z) verlagerbar sind.

13. Transportwagen nach einem der vorhergehenden Ansprüche,
wobei zwischen den Querseitenteilen (1) wenigstens ein Stützbügel (50) zur Abstützung der Fördereinrichtung vorgesehen ist.

14. Transportwagen nach Anspruch 13,
wobei der wenigstens eine Stützbügel (50) eine Antriebseinheit der Fördereinrichtung aufweist.

## Claims

1. A transport wagon for cargo, having a loading platform onto which the cargo has been loaded in the loaded state of the transport wagon, wherein the loading platform extends along a longitudinal axis (L), and having a strapping system which allows the cargo to be secured on the loading platform and comprises at least one tensioning means (10) which can be guided, with the aid of an associated conveying device, at least partially around the cargo loaded onto the loading platform in order to tension the loaded cargo against the loading platform,
wherein the loading platform is delimited at its frontal ends by transverse side parts (1) which comprise the conveying device of the strapping system,
**characterized in that** the at least one tensioning means (10) is fastened to the transport wagon so as to be movable in the direction of the longitudinal axis (L) relative to the loading platform.

2. The transport wagon as claimed in claim 1,
wherein the at least one tensioning means (10) of the strapping system is arranged along one of the longitudinal sides of the loading platform and can be guided with the aid of the conveying device at least partially in a direction transversely to the longitudinal extent of the transport wagon around the cargo loaded on the loading platform.

3. The transport wagon as claimed in claim 1 or 2,
wherein the at least one tensioning means (10) is able to be variably coupled to and uncoupled from the conveying device.

4. The transport wagon as claimed in claim 1, 2 or 3,
wherein the conveying device has a plurality of fastening points (3a, 13a) distributed along the longitudinal axis (L), at which the at least one tensioning means (10) is able to be variably coupled to and uncoupled from the conveying device.

5. The transport wagon as claimed in claim 4,
wherein each of the fastening points (3a, 13a) of the conveying device has a resiliently pretensioned fastening member (31) which is capable of cooperating with a corresponding recess (33) in the tensioning means (10) in order to fasten the tensioning means (10).

6. The transport wagon as claimed in one of the preceding claims,
wherein the strapping system comprises at least one tensioning device for tensioning the at least one tensioning means (10).

7. The transport wagon as claimed in claim 6,
wherein the tensioning device comprises a tensioning shaft (17) which is rotatable about its longitudinal axis and on which the at least one tensioning means (10) is able to be at least partially wound and unwound by rotating the tensioning shaft (17).

8. The transport wagon as claimed in either of claims 6 and 7,
wherein, in a region in which the at least one tensioning means (10) is able to be wound onto and unwound from a component of the tensioning device, the tensioning device provides a greater degree of static friction between this component of the tensioning device and the tensioning means (10).

9. The transport wagon as claimed in one of claims 6 to 8,
wherein the tensioning device comprises a drive unit (28) for driving in rotation and optionally an overload safety device.

10. The transport wagon as claimed in one of claims 6 to 9,
wherein the tensioning device has a tensioning bracket (42) for retensioning the at least one tensioning means (10).

11. The transport wagon as claimed in one of the preceding claims,
wherein the conveying device comprises at least one guide rope (13) and/or guide bar (3), to which the at least one tensioning means (10) is able to be connected such that it can be guided by means of the guide rope (13) and/or the guide bar (3) at least partially around the cargo loaded onto the loading platform.

12. The transport wagon as claimed in one of the preceding claims,
wherein portions of the transverse side parts (1), which comprise the conveying device of the strapping system, are movable in a direction (Z) perpendicular to the loading platform relative to the loading platform.

13. The transport wagon as claimed in one of the preceding claims,
wherein at least one supporting bracket (50) for supporting the conveying device is provided between the transverse side parts (1).

14. The transport wagon as claimed in claim 13,
wherein the at least one supporting bracket (50) has a drive unit of the conveying device.

## Revendications

1. Chariot de transport pour marchandises de détail avec une plate-forme de chargement, sur laquelle les marchandises de détail sont chargées dans l'état de chargement du chariot de transport, la plate-forme de chargement s'étendant le long d'un axe longitudinal (L), et avec un système de sanglage, qui permet une fixation des marchandises de détail sur la plate-forme de chargement et comprend au moins un moyen de serrage (10), qui peut être guidé à l'aide d'un dispositif de transport associé au moins par sections autour des marchandises de détail chargées sur la plate-forme de chargement, afin de serrer les marchandises de détail chargées contre la plate-forme de chargement,
la plate-forme de chargement étant délimitée à ses extrémités frontales par des parties latérales transversales (1) qui comprennent le dispositif de transport du système d'arrimage,
**caractérisé en ce que** l'au moins un moyen de serrage (10) étant fixé au chariot de transport de manière à pouvoir être déplacé par rapport à la plate-forme de chargement dans la direction de l'axe longitudinal (L).

2. Chariot de transport selon la revendication 1,
l'au moins un moyen de serrage (10) du système de sanglage est disposé le long d'un des côtés longitudinaux de la plate-forme de chargement et peut être guidé à l'aide du dispositif de transport au moins par sections dans une direction transversale à l'extension longitudinale du chariot de transport autour de la marchandise chargée sur la plate-forme de chargement.

3. Chariot de transport selon la revendication 1 ou 2,
dans lequel l'au moins un moyen de serrage (10) peut être couplé de manière variable au dispositif de transport et découplé de celui-ci.

4. Chariot de transport selon la revendication 1, 2 ou 3,
dans lequel le dispositif de transport présente plusieurs points de fixation (3a, 13a) répartis le long de l'axe longitudinal (L), au niveau desquels l'au moins un moyen de serrage (10) peut être couplé de manière variable au dispositif de transport et découplé de celui-ci.

5. Chariot de transport selon la revendication 4,
dans lequel chacun des points de fixation (3a, 13a) du dispositif de transport présente un élément de fixation (31) précontraint élastiquement, qui est apte à coopérer avec un évidement correspondant (33) sur le moyen de serrage (10) pour la fixation du moyen de serrage (10).

6. Chariot de transport selon l'une quelconque des revendications précédentes,
dans lequel le système de sanglage comprend au moins un dispositif de tension pour tendre le au moins un moyen de tension (10).

7. Chariot de transport selon la revendication 6,
dans lequel le dispositif de serrage comprend un arbre de serrage (17) pouvant tourner autour de son axe longitudinal, sur lequel l'au moins un moyen de serrage (10) peut être enroulé et déroulé au moins par sections par rotation de l'arbre de serrage (17).

8. Chariot de transport selon l'une quelconque des revendications 6 ou 7,
dans lequel le dispositif de serrage fournit, dans une zone dans laquelle le au moins un moyen de serrage (10) peut être enroulé et déroulé sur un composant du dispositif de serrage, une friction adhésive accrue entre ce composant du dispositif de serrage et le moyen de serrage (10).

9. Chariot de transport selon l'une quelconque des revendications 6 à 8,
dans lequel le dispositif de serrage comprend une unité d'entraînement (28) pour l'entraînement en rotation ainsi que, en option, une protection contre les surcharges.

10. Chariot de transport selon l'une quelconque des revendications 6 à 9,
dans lequel le dispositif de serrage présentant un étrier de serrage (42) pour le resserrage d'au moins un moyen de serrage (10).

11. Chariot de transport selon l'une quelconque des revendications précédentes,
dans lequel le dispositif de transport comprend au moins un câble de guidage (13) et/ou une barre de guidage (3), avec lequel ou laquelle l'au moins un moyen de serrage (10) peut être relié de telle sorte qu'il peut être guidé au moyen du câble de guidage (13) et/ou de la barre de guidage (3) au moins par sections autour de la marchandise de détail chargée sur la plate-forme de chargement.

12. Chariot de transport selon l'une quelconque des revendications précédentes,
dans lequel des sections des parties latérales transversales (1), qui entourent le dispositif de transport du système de sanglage, peuvent être déplacées par rapport à la plate-forme de chargement dans une direction (Z) perpendiculaire à la plate-forme de chargement.

13. Chariot de transport selon l'une quelconque des revendications précédentes,
dans lequel il est prévu entre les parties latérales transversales (1) au moins un étrier de support (50) pour soutenir le dispositif de transport.

14. Chariot de transport selon la revendication 13,
dans lequel l'au moins un étrier de support (50) présente une unité d'entraînement du dispositif de transport..
